(19) **Europäisches Patentamt**
**European Patent Office**
**Office européen des brevets**

(11) **EP 4 557 221 A1**

(12) **EUROPEAN PATENT APPLICATION**
published in accordance with Art. 153(4) EPC

(43) Date of publication:
**21.05.2025 Bulletin 2025/21**

(21) Application number: **23839381.3**

(22) Date of filing: **12.06.2023**

(51) International Patent Classification (IPC):
***G06T 9/00*** (2006.01)

(52) Cooperative Patent Classification (CPC):
**G06T 9/00**

(86) International application number:
**PCT/JP2023/021711**

(87) International publication number:
**WO 2024/014205 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.07.2022 US 202263388734 P**

(71) Applicant: **Panasonic Intellectual Property
Corporation
of America
Torrance, CA 90504 (US)**

(72) Inventors:
• **OHKAWA, Masato**
**Kadoma-shi, Osaka 571-0057 (JP)**
• **IGUCHI, Noritaka**
**Kadoma-shi, Osaka 571-0057 (JP)**
• **SUGIO, Toshiyasu**
**Kadoma-shi, Osaka 571-0057 (JP)**
• **NISHI, Takahiro**
**Kadoma-shi, Osaka 571-0057 (JP)**
• **DALLA LIBERA, Fabio**
**Kadoma-shi, Osaka 571-0057 (JP)**

(74) Representative: **Grünecker Patent- und
Rechtsanwälte
PartG mbB
Leopoldstraße 4
80802 München (DE)**

(54) **DECODING METHOD, ENCODING METHOD, DECODING DEVICE, AND ENCODING DEVICE**

(57)    A decoding method includes: receiving a bitstream generated by encoding three-dimensional points each including first attribute information and second attribute information (S401); and predicting the first attribute information by referring to the second attribute information (S402). For example, the first attribute information to be predicted and the second attribute information to be referred to may be included in the same three-dimensional point. For example, the first attribute information to be predicted and the second attribute information to be referred to may be included in different three-dimensional points. For example, the first attribute information and the second attribute information may stored in a first component and a second component, respectively.

FIG. 31

```
          Start

  ┌──────────────────────────┐  S401
  │ Receive bitstream generated by encoding
  │ three-dimensional points each including
  │ first attribute information and second
  │ attribute information
  └──────────────────────────┘

  ┌──────────────────────────┐  S402
  │ Predict first attribute information by
  │ referring to second attribute information
  └──────────────────────────┘

           End
```

EP 4 557 221 A1

**Description**

[Technical Field]

The present disclosure relates to a decoding method, an encoding method, a decoding device, and an encoding device.

[Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

[Citation List]

[Patent Literature]

[PTL 1] International Publication WO 2014/020663

[Summary of Invention]

[Technical Problem]

In the encoding processing and decoding processing of three-dimensional data, there is a demand for reducing the data amount of encoded data.

The present disclosure has as an object to provide a decoding method, an encoding method, a decoding device, or an encoding device capable of reducing the data amount of encoded data.

[Solution to Problem]

A decoding method according to an aspect of the present disclosure includes: receiving a bitstream generated by encoding three-dimensional points each including first attribute information and second attribute information; and predicting the first attribute information by referring to the second attribute information.

An encoding method according to an aspect of the present disclosure is an encoding method for encoding three-dimensional points to generate a bitstream, the three-dimensional points each including first attribute information and second attribute information. The encoding method includes: predicting the first attribute information by referring to the second attribute information; and encoding the first attribute information using a result of the predicting.

[Advantageous Effects of Invention]

The present disclosure can provide a decoding method, an encoding method, a decoding device, or an encoding device capable of reducing the data amount of encoded data.

[Brief Description of Drawings]

[FIG. 1]

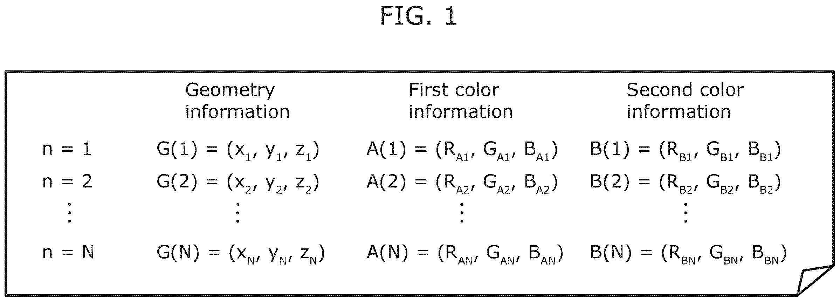

FIG. 1 is a diagram illustrating an example configuration of point cloud data according to Embodiment 1.
[FIG. 2]

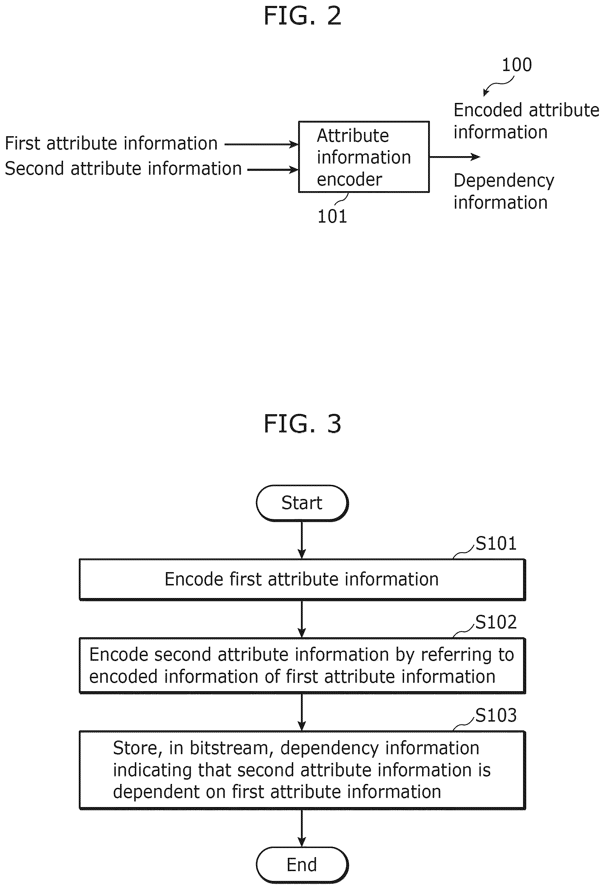

FIG. 2 is a block diagram illustrating the configuration of a three-dimensional data encoding device according to Embodiment 1.
[FIG. 3]
FIG. 3 is a flowchart of encoding processing of attribute information according to Embodiment 1.
[FIG. 4]

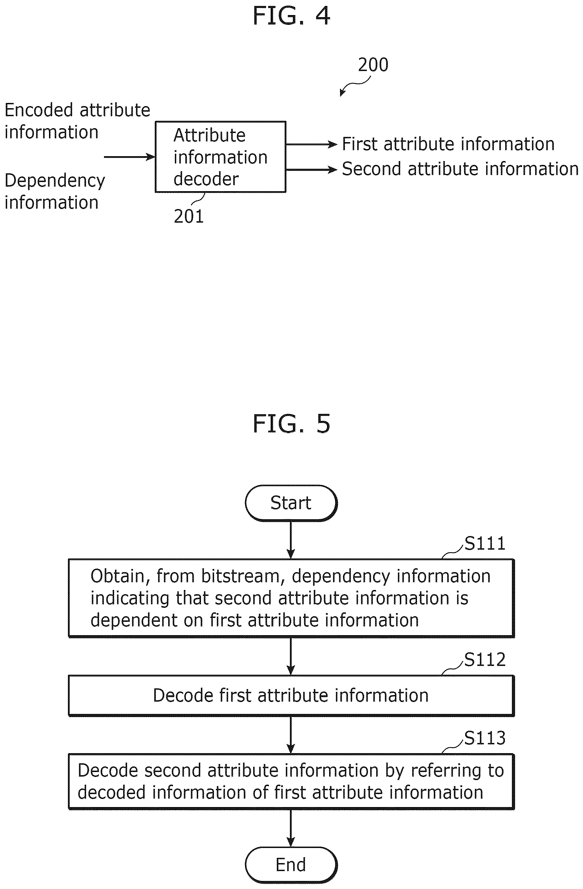

FIG. 4 is a block diagram illustrating the configuration of a three-dimensional data decoding device according to Embodiment 1.
[FIG. 5]
FIG. 5 is a flowchart of decoding processing of attribute information according to Embodiment 1.
[FIG. 6]

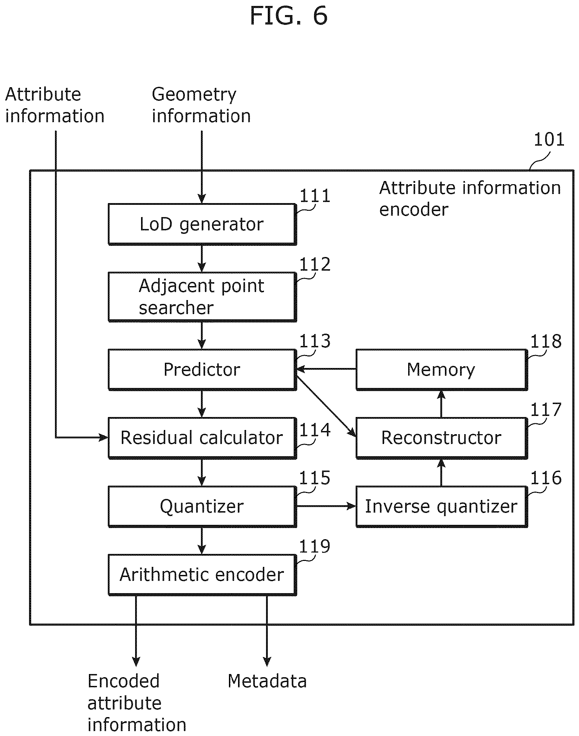

FIG. 6 is a block diagram illustrating the configuration of an attribute information encoder according to Embodiment 1.
[FIG. 7]

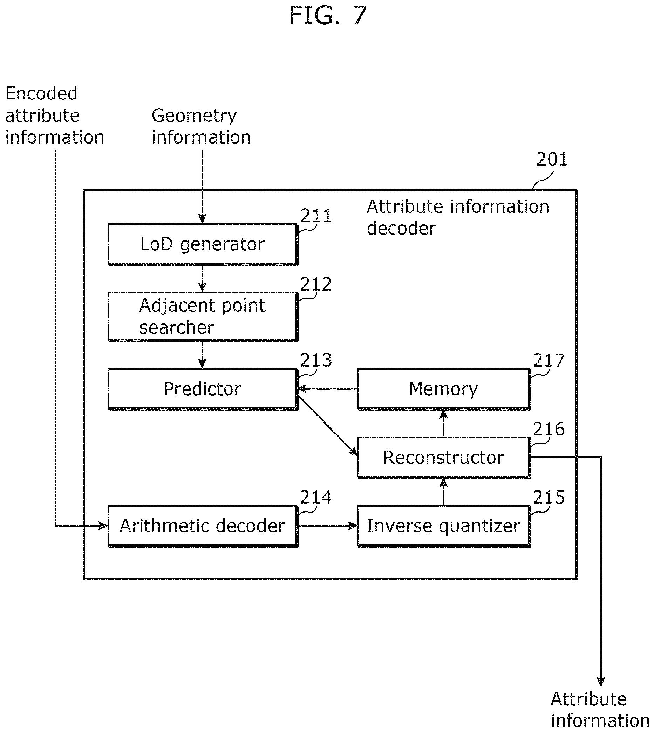

FIG. 7 is a block diagram illustrating the configuration of an attribute information decoder according to Embodiment 1.
[FIG. 8]

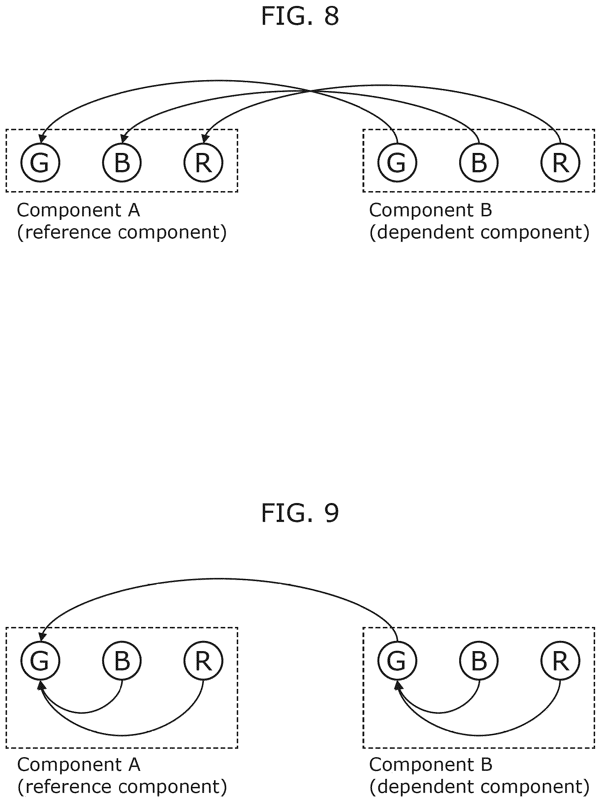

FIG. 8 is a diagram illustrating the reference relationship in a first example of prediction processing according to Embodiment 1.
[FIG. 9]
FIG. 9 is a diagram illustrating the reference relationship in a second example of prediction processing according to Embodiment 1.
[FIG. 10]

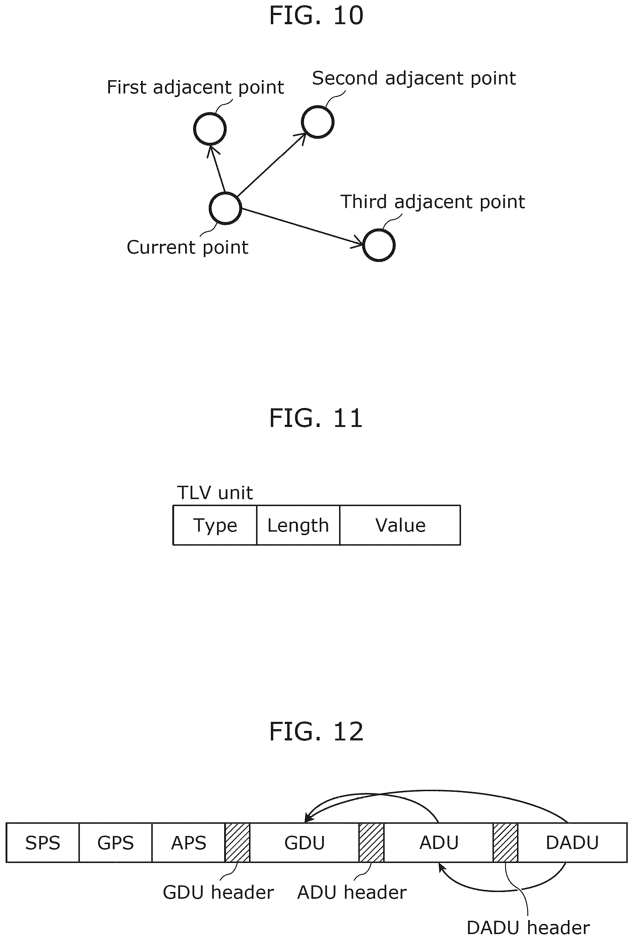

FIG. 10 is a diagram for describing prediction processing according to prediction mode according to Embodiment 1.
[FIG. 11]
FIG. 11 is a diagram illustrating the configuration of TLV data according to Embodiment 1.
[FIG. 12]
FIG. 12 is a diagram illustrating the configuration of a bitstream according to Embodiment 1.
[FIG. 13]

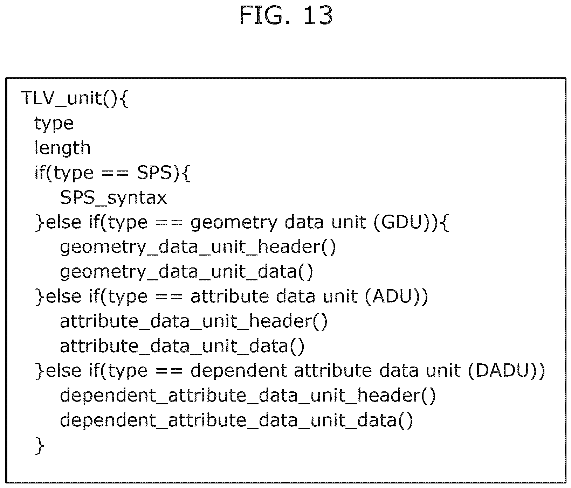

FIG. 13 is a diagram illustrating an example of a syntax of a TLV unit (TLV_unit) according to Embodiment 1.
[FIG. 14]

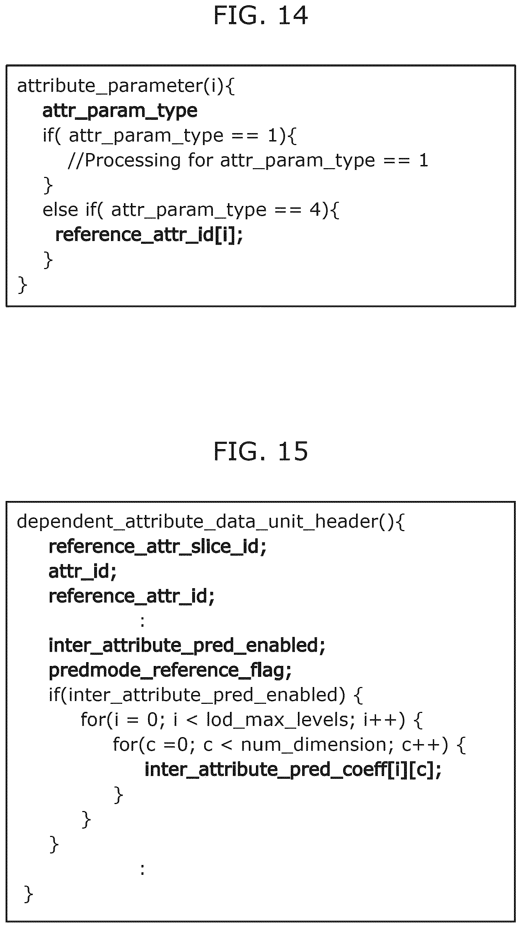

FIG. 14 is a diagram illustrating an example of a syntax of attribute_parameter according to Embodiment 1.
[FIG. 15]
FIG. 15 is a diagram illustrating an example of a syntax of a dependent attribute data unit header according to Embodiment 1.
[FIG. 16]

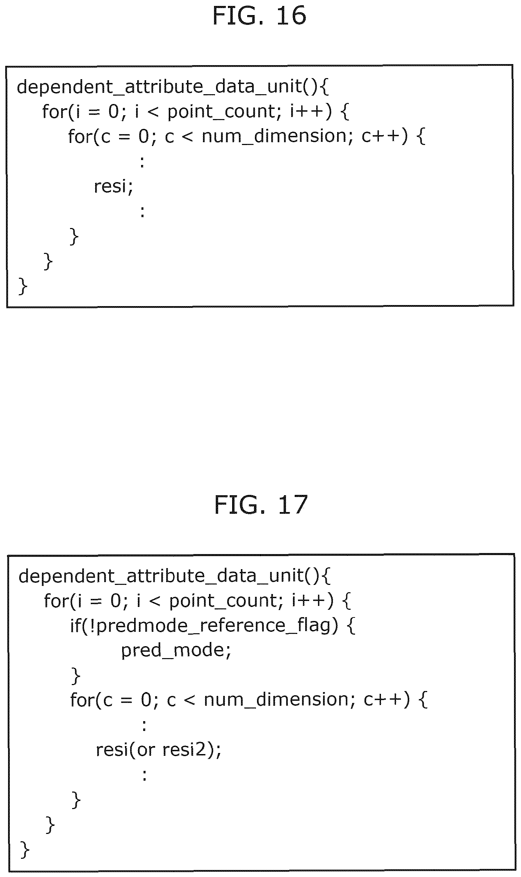

FIG. 16 is a diagram illustrating an example of a syntax of a dependent attribute data unit according to Embodiment 1.
[FIG. 17]
FIG. 17 is a diagram illustrating an example of a syntax of a dependent attribute data unit according to Embodiment 1.
[FIG. 18]

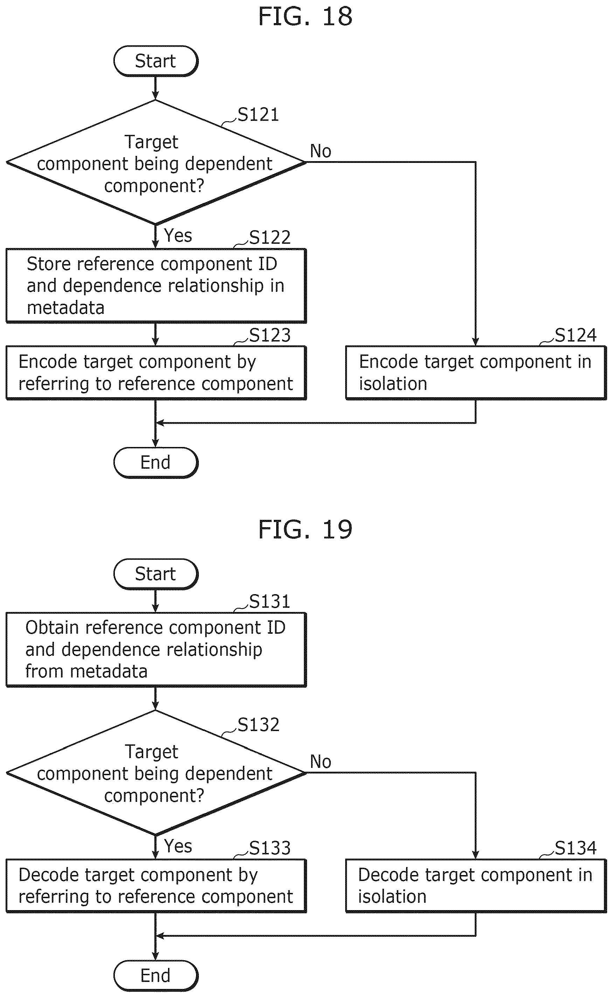

FIG. 18 is a flowchart of encoding processing of attribute information according to Embodiment 1.
[FIG. 19]
FIG. 19 is a flowchart of decoding processing of attribute information according to Embodiment 1.
[FIG. 20]

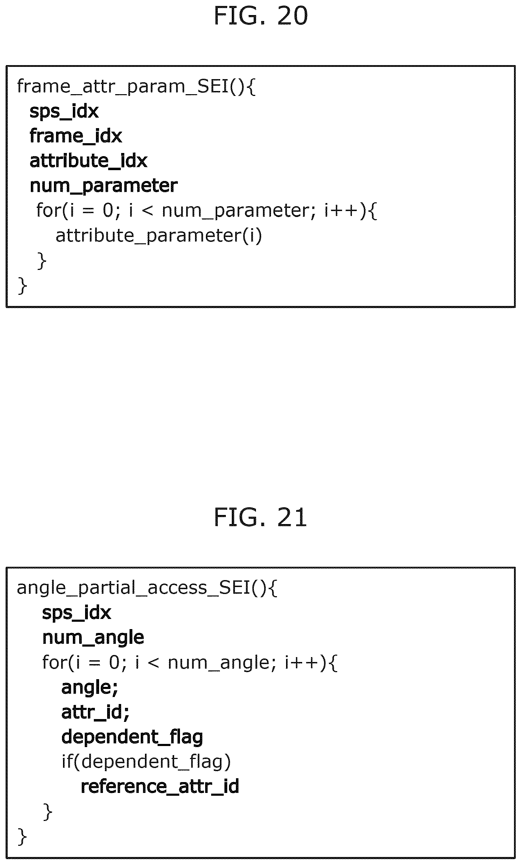

FIG. 20 is a diagram illustrating an example of a syntax of frame_attr_param_SEI according to Embodiment 1.
[FIG. 21]
FIG. 21 is a diagram illustrating an example of a syntax of angle_partial_access_SEI according to Embodiment 1.
[FIG. 22]

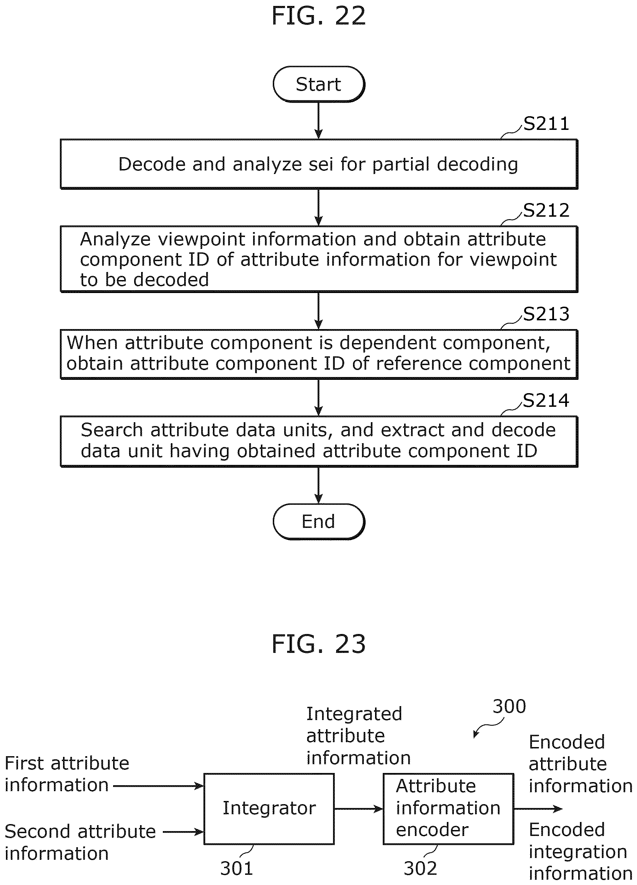

FIG. 22 is a flowchart of decoding processing when performing partial decoding according to Embodiment 1.
[FIG. 23]
FIG. 23 is a block diagram illustrating the configuration of a three-dimensional data encoding device according to Embodiment 2.
[FIG. 24]

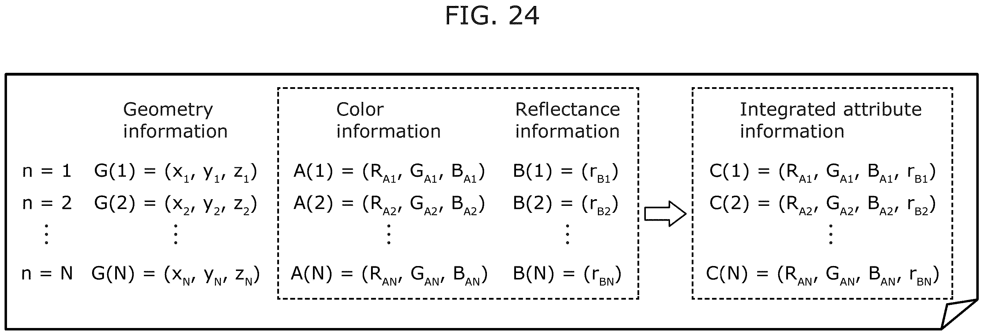

FIG. 24 is a diagram illustrating an example of subcomponent integration according to Embodiment 2.
[FIG. 25]

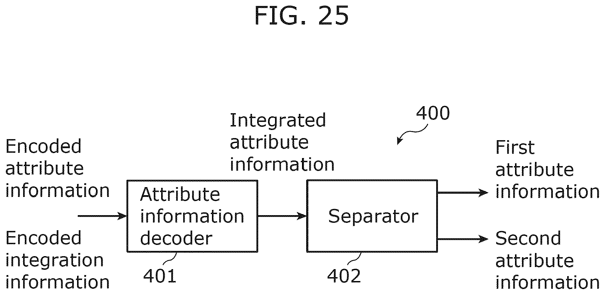

FIG. 25 is a block diagram illustrating the configuration of a three-dimensional data decoding device according to Embodiment 2.
[FIG. 26]

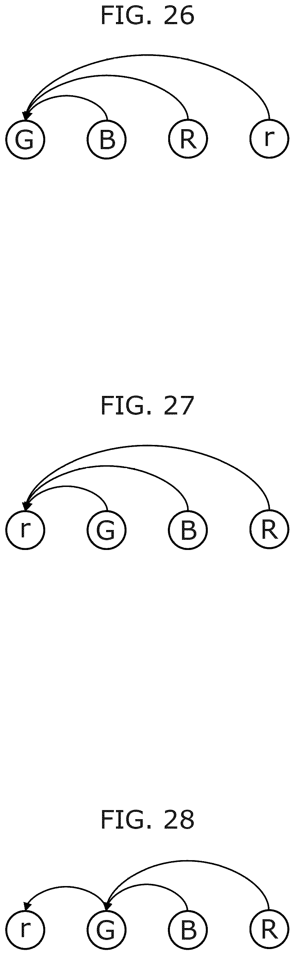

FIG. 26 is a diagram illustrating the reference relationship in inter-sub-component prediction according to Embodiment 2.

[FIG. 27]

FIG. 27 is a diagram illustrating the reference relationship in inter-sub-component prediction according to Embodiment 2.

[FIG. 28]

FIG. 28 is a diagram illustrating the reference relationship in inter-sub-component prediction according to Embodiment 2.

[FIG. 29]

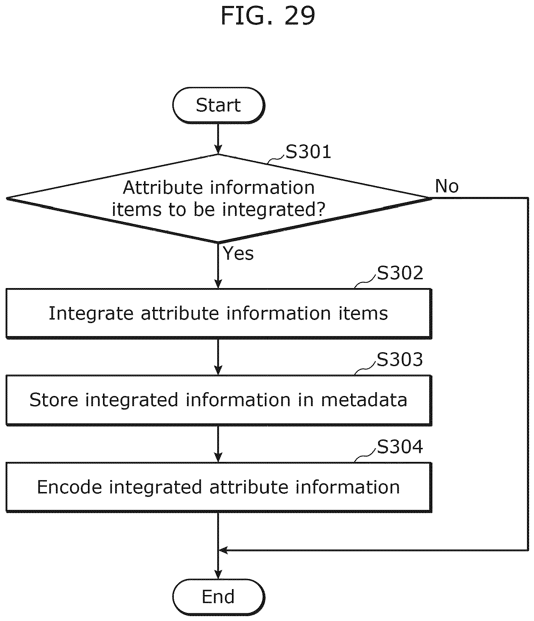

FIG. 29 is a flowchart of encoding processing of attribute information according to Embodiment 2.

[FIG. 30]

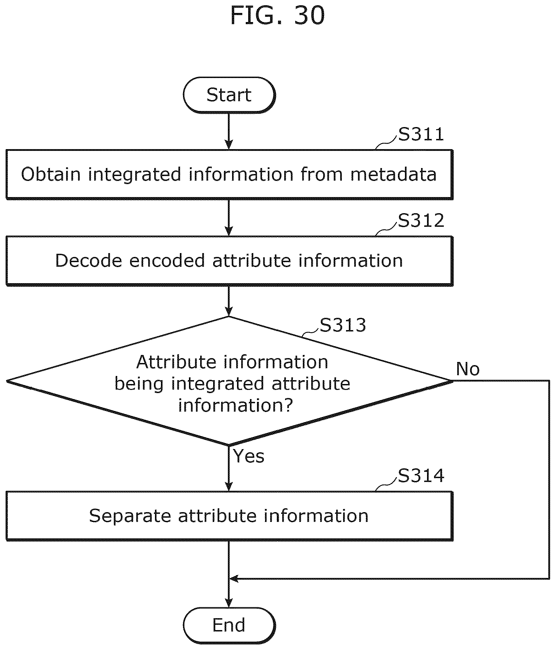

FIG. 30 is a flowchart of decoding processing of attribute information according to Embodiment 2.

[FIG. 31]

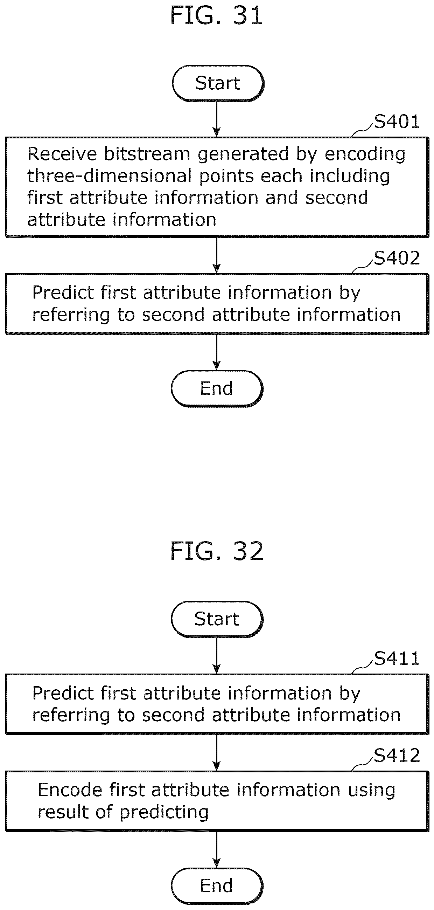

FIG. 31 is a flowchart of decoding processing.

[FIG. 32]

FIG. 32 is a flowchart of encoding processing.


[Description of Embodiments]


A decoding method according to an aspect of the present disclosure includes: receiving a bitstream generated by encoding three-dimensional points each including first attribute information and second attribute information; and predicting the first attribute information by referring to the second attribute information. Therefore, by predicting the first attribute information by referring to the second attribute information, it may be possible to reduce the data amount of the first attribute information. Accordingly, the data amount that is handled in the decoding device can be reduced.

A decoding method according to an aspect of the present disclosure includes: receiving a bitstream; and decoding the bitstream. The bitstream includes: encoded attribute information of three-dimensional points each including first attribute information and second attribute information, and meta information indicating that the first attribute information is to be predicted by referring to the second attribute information. There are cases where there is a correlation between attribute information. Therefore, by predicting the first attribute information by referring to the second attribute information, it may be possible to reduce the data amount of the first attribute information. The decoding device can appropriately decode a bitstream for which the data amount has been reduced in the above manner, by using meta information. Furthermore, the data amount that is handled in the decoding device can be reduced.

For example, the first attribute information to be predicted and the second attribute information to be referred to may be included in a same one of the three-dimensional points. By predicting the first attribute information of a three-dimensional point by referring to the second attribute information of the three-dimensional point, it may be possible to reduce the data amount of the first attribute information. Accordingly, the data amount that is handled in the decoding device can be reduced.

For example, the first attribute information to be predicted and the second attribute information to be referred to may be included in different ones of the three-dimensional points.

For example, the first attribute information and the second attribute information may be stored in a first component and a second component, respectively.

For example, a first quantization step for the first attribute information may be greater than a second quantization step for the second attribute information. By using a small quantization step for the second attribute information that is to be referred to by other attribute information, deterioration of the second attribute information can be suppressed and accuracy of first attribute information prediction which refers to the second attribute information can be improved. Furthermore, by using a big quantization step for the first attribute information, the data amount can be reduced. Accordingly, encoding efficiency is improved while suppressing the deterioration of information as a whole.

For example, the first attribute information and the second attribute information may be generated by decoding first encoded attribute information and second encoded attribute information, respectively, and the second attribute information may have been losslessly compressed. By using lossless compression on the second attribute information that is referred to by other attribute information, deterioration of the second attribute information can be suppressed and accuracy of first attribute information prediction which refers to the second attribute information can be improved. Accordingly, encoding efficiency is improved while suppressing the deterioration of information as a whole.

For example, the first component and the second component may each include a first dimension element and a second dimension element, the first dimension element of the first component may be predicted by referring to the first dimension element of the second component, and the second dimension element of the first component may be predicted by referring to the second dimension element of the second component. Accordingly, when there is a correlation between the same dimension elements in a plurality of components, the data amount can be reduced by using this correlation.

For example, the first component may include a first dimension element and a second dimension element, the first dimension element may be predicted by referring to the second component, and the second dimension element may be predicted by referring to the first dimension element. Accordingly, depending on the attribute information, there are cases where there is a correlation between different components, and there are cases where there is a correlation between dimension elements included in a component. Therefore, by using the correlation between components and the correlation between dimension elements, the data amount can be reduced.

For example, the bitstream: need not include information on a first prediction mode applied to the first component; and may include information on a second prediction mode applied to the second component. Accordingly, since information on the first component can be reduced, the data amount can be reduced.

For example, the bitstream may include a first residual value of the first attribute information, the first residual value may be a difference between a third residual value of the first attribute information and a second residual value of the second attribute information, the third residual value may be a difference between a first value of the first attribute information and a first predicted value of the first attribute information, and the second residual value may be a difference between a second value of the second attribute information and a second predicted value of the second attribute information. Accordingly, since the difference between the residual of the first attribute information and the residual of the second attribute information is to be encoded, the data amount is reduced.

For example, the bitstream may include a first residual value of the first attribute information, and the first residual value may be a difference between a first value of the first attribute information and a second value of the second attribute information. Accordingly, since the difference between the value of the first attribute information and the value of the second attribute information is to be encoded, the data amount is reduced.

For example, the bitstream may include a first residual value of the first attribute information, and the first residual value may be a difference between a first value of the first attribute information and a second predicted value of the second attribute information. Accordingly, since the difference between the value of the first attribute information and the predicted value of the second attribute information is to be encoded, the data amount is reduced. Furthermore, since there is no need to calculate the predicted value of the first attribute information, the processing amount can be reduced.

For example, the bitstream may include flag information indicating whether reference to the second attribute information in order to predict the first attribute information is enabled. Accordingly, since the decoding device can determine whether the second attribute information can be referred to in predicting the first attribute information by referring to the flag information, the decoding device can appropriately decode the bitstream.

For example, the bitstream may include coefficient information for calculating a first predicted value of the first attribute information. By using coefficient information, the data amount of a residual can be reduced.

For example, the bitstream may include a first data unit and a second data unit, the first data unit storing attribute information to be predicted by referring to other attribute information, the second data unit storing attribute information not to be predicted by referring to other attribute information.

For example, the first attribute information may include RGB values, the second attribute information may include a reflectance value, and at least one value among the RGB values may be predicted by referring to the reflectance value. Accordingly, by using the correlation between colors that are typically correlated and reflectance, the data amount can be reduced.

An encoding method according to an aspect of the present disclosure is an encoding method for encoding three-dimensional points to generate a bitstream, the three-dimensional points each including first attribute information and second attribute information. The encoding method includes: predicting the first attribute information by referring to the second attribute information; and encoding the first attribute information using a result of the predicting. Therefore, by predicting the first attribute information by referring to the second attribute information, the data amount of the first attribute information can be reduced.

Furthermore, a decoding device according to an aspect of the present disclosure includes: a processor; and memory. Using the memory, the processor: receives a bitstream generated by encoding three-dimensional points each including first attribute information and second attribute information; and predicts the first attribute information by referring to the second attribute information.

Furthermore, an encoding device according to an aspect of the present disclosure is an encoding device that encodes three-dimensional points to generate a bitstream, the three-dimensional points each including first attribute information and second attribute information. The encoding device includes: a processor; and memory. Using the memory, the processor: predicts the first attribute information by referring to the second attribute information; and encodes the first attribute information using a result of the predicting.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

[EMBODIMENT 1]

Hereinafter, a three-dimensional data encoding device and a three-dimensional data decoding device according to the present embodiment will be described. The three-dimensional data encoding device encodes three-dimensional data to thereby generate a bitstream. The three-dimensional data decoding device decodes the bitstream to thereby generate three-dimensional data.

Three-dimensional data is, for example, three-dimensional point cloud data (also called point cloud data). A point cloud, which is a set of three-dimensional points, represents the three-dimensional shape of an object. The point cloud data includes position information and attribute information on the three-dimensional points. The position information indicates the three-dimensional position of each three-dimensional point. It should be noted that position information may also be called geometry information. For example, the geometry information is represented using an orthogonal coordinate system or a polar coordinate system.

Attribute information indicates color information, reflectance, transmittance, infrared information, a normal vector, or time-of-day information, for example. One three-dimensional point may have a single item of attribute information or have a plurality of kinds of attribute information.

The attribute information has different numbers of dimensions in accordance with the kind of the attribute. For example, the color information has three elements (three dimensions), such as RGB or YCbCr. The reflectance has one element (one dimension). The attribute information may have different restrictions, such as different ranges of possible values, different bit depths, or whether the attribute information can assume a negative value or not, in accordance with the kind of the attribute.

Note that a plurality of kinds of attribute information means not only different categories of information, such as color information and reflectance, but also different formats of the same category of information, such as RGB and YCbCr, or different contents of the same category of information, such as color information from different viewpoints. In the following, different kinds of attribute information may be referred to simply as different items of attribute information or the like.

The three-dimensional data is not limited to point cloud data and may be other types of three-dimensional data, such as mesh data. Mesh data (also called three-dimensional mesh data) is a data format used for computer graphics (CG) and represents the three-dimensional shape of an object as a set of surface information items. For example, mesh data includes point cloud information (e.g., vertex information), which may be processed by techniques similar to those for point cloud data.

Conventional three-dimensional data encoding and decoding systems independently encode and decode each of a plurality of kinds of attribute information.

In the present embodiment, to encode a certain kind of attribute information, the three-dimensional data encoding device refers to another kind of attribute information when encoding a plurality of different kinds of attribute information. Accordingly, a code amount can be reduced.

For example, the three-dimensional data encoding device sets the first attribute information as reference attribution information and sets the second attribute information as dependent attribute information. The three-dimensional data encoding device first encodes the first attribute information and next performs prediction by referring to a result of encoding the first attribute information in encoding the second attribute information. Accordingly, a code amount can be reduced. Here, the result of encoding the first attribute information is, for example, a value obtained by reconfiguring the first attribute information. Specifically, the result is a value obtained by decoding the first attribute information after the encoding. In addition, the three-dimensional data encoding device generates metadata indicating that the first attribute information is the reference attribution information, and that the second attribute information is the dependent attribute information. The three-dimensional data encoding device stores the metadata in the bitstream.

The three-dimensional data decoding device obtains the metadata from the bitstream. In addition, the three-dimensional data decoding device first decodes the first attribute information and next performs prediction by referring to a result of decoding the first attribute information in decoding the second attribute information.

It should be noted that the generation and transmission of the metadata may be omitted, and the three-dimensional data encoding device and the three-dimensional data decoding device may fixedly treat top attribute information as the reference attribution information.

More specifically, when a three-dimensional point is observed from a plurality of viewpoints, for example, the way in which light falls on the three-dimensional point and the way in which the three-dimensional point appears vary with the viewpoint, so that the three-dimensional point has a different color value for each viewpoint. FIG. 1 is a diagram illustrating an example configuration of such point cloud data. As illustrated in FIG. 1, each point has geometry information, first color information, and second color information. Here, the first color information and the second color information are attribute information and color information corresponding to different viewpoints, for example.

In such a point cloud, the correlation between the first color information and the second color information may be high. Therefore, by using the first color information to perform the prediction when the second color information is encoded by the above-described method, it may be possible to generate difference information having a small data size. Accordingly, it may be possible to reduce a code amount.

In addition, the three-dimensional data encoding device transmits an identifier indicating that the first attribute information is the reference attribution information, and that the second attribute information is the dependent attribute information. Accordingly, the three-dimensional data decoding device is enabled to obtain the identifier from the bitstream and determine a dependence relationship based on the identifier to perform the decoding.

In the following, configurations of a three-dimensional data encoding device and a three-dimensional data decoding device according to the present embodiment will be described. FIG. 2 is a block diagram illustrating a configuration of three-dimensional data encoding device 100 according to the present embodiment. Three-dimensional data encoding device 100 encodes a plurality of items of attribute information (first to second attribute information) to generate encoded attribute information and dependency information. Three-dimensional data encoding device 100 includes attribute information encoder 101. Note that FIG. 2 illustrates only processors involved in the encoding of attribute information. Three-dimensional data encoding device 100 may include other processors, such as a geometry information encoder that encodes geometry information.

FIG. 3 is a flowchart of encoding processing of the items of attribute information by three-dimensional data encoding device 100. First, attribute information encoder 101 encodes the first attribute information (S101). Here, attribute information encoder 101 encodes each of the plurality of items of attribute information as one attribute component. For example, attribute information encoder 101 encodes the first attribute information as a first component and encodes the second attribute information as a second component.

In addition, after encoding the first attribute information, attribute information encoder 101 encodes the second attribute information by referring to the first attribute information (S102). Specifically, attribute information encoder 101 calculates a predicted value by performing prediction by referring to encoded information of the first attribute information. Attribute information encoder 101 encodes the second attribute information using the prediction value. For example, attribute information encoder 101 calculates a prediction residual (residual value) that is a difference between the second attribute information and the prediction value. In addition, attribute information encoder 101 generates encoded attribute information by arithmetically encoding (entropy encoding) the prediction residual. It should be noted that the arithmetic encoding need not be performed.

It should be noted that the encoded information of the first attribute information is, for example, a value obtained by reconfiguring the first attribute information. Specifically, the encoded information is a value obtained by decoding the first attribute information after the encoding. Alternatively, the encoded information of the first attribute information may be information used in encoding the first attribute information.

Here, first attribute information that is referred to by other attribute information will be referred to as reference attribution information, and an attribute component including the reference attribution information will be referred to as a reference component. In addition, second attribute information that refers to other attribute information will be referred to as dependent attribute information, and an attribute component including the dependent attribute information will be referred to as a dependent component.

In addition, attribute information encoder 101 stores, in the bitstream (encoded data), dependency information indicating that the second attribute information is dependent on the first attribute information (S103). In other words, the dependency information is meta information indicating that the second attribute information is to be predicted by referring to the first attribute information.

FIG. 4 is a block diagram illustrating a configuration of three-dimensional data decoding device 200 according to the present embodiment. Three-dimensional data decoding device 200 decodes encoded attribute information and dependency information included in a bitstream to generate a plurality of items of attribute information (first to second attribute information). Three-dimensional data decoding device 200 includes attribute information decoder 201. Note that FIG. 4 illustrates only processors involved in the decoding of the attribute information. Three-dimensional data decoding device 200 may include other processors, such as a geometry information decoder that decodes geometry information.

FIG. 5 is a flowchart of decoding processing of attribute information by three-dimensional data decoding device 200. Attribute information decoder 201 decodes the plurality of items of attribute information. Specifically, attribute information decoder 201 obtains, from the bitstream, dependency information indicating that the second attribute information is dependent on the first attribute information (S111). Next, attribute information decoder 201 decodes the first attribute information and the second attribute information based on the dependency information.

Specifically, attribute information decoder 201 decodes the first attribute information (S112). Next, attribute information decoder 201 decodes the second attribute information by referring to decoded information of the first attribute information (S113). Specifically, attribute information decoder 201 calculates a predicted value by performing prediction by referring to decoded information of the first attribute information. Attribute information decoder 201 decodes the second attribute information using the prediction value. For example, attribute information decoder 201 obtains a prediction residual (difference) between the second attribute information and the prediction value from the bitstream. It should be noted that, when the second attribute information is arithmetically encoded, attribute information decoder 201 obtains the prediction residual by entropy decoding the encoded attribute information. Attribute information decoder 201 sums the obtained prediction residual and the prediction value to reconstruct the second attribute information.

It should be noted that the decoded information of the first attribute information is, for example, a value obtained by decoding (reconfiguring) the first attribute information. Alternatively, the decoded information of the first attribute information may be information used in decoding the first attribute information.

Next, a configuration of attribute information encoder 101 and processing of encoding attribute information will be described. Herein, for example, a case will be described in which attribute information encoder 101 is an encoder (LoD based attribute encoder) that performs encoding using LoD.

FIG. 6 is a block diagram illustrating a configuration of attribute information encoder 101. Attribute information encoder 101 includes LoD generator 111, adjacent point searcher 112, predictor 113, residual calculator 114, quantizer 115, inverse quantizer 116, reconstructor 117, memory 118, and arithmetic encoder 119.

LoD generator 111 generates a LoD hierarchy using position (geometry) information of a plurality of three-dimensional points. Adjacent point searcher 112 searches for an adjacent three-dimensional point (adjacent point) of a current point to be processed using the LoD generation result and distance information about distances between the three-dimensional points.

Predictor 113 generates predicted values of items of attribute information on the current point. Specifically, predictor 113 generates a predicted value of reference attribution information on the current point by referring to attribute information on the adjacent point different from the current point. In addition, predictor 113 generates a predicted value of dependent attribute information on the current point using encoded information of the reference attribution information on the current point. Residual calculator 114 generates prediction residuals (residual values) that are differences between the items of attribute information and the predicted values. Specifically, residual calculator 114 generates a difference between the reference attribution information and the predicted value of the reference attribution information as a prediction residual of the reference attribution information. Residual calculator 114 generates a difference between the dependent attribute information and the prediction value of the dependent attribute information as a prediction residual of the dependent attribute information.

Quantizer 115 quantizes the prediction residual. Inverse quantizer 116 inverse-quantizes the quantized prediction residual. Reconstructor 117 sums the prediction value and the inverse-quantized prediction residual to generate a decoded value, which is the decoded attribute information of the current point.

Memory 118 stores encoded information which is the attribute information (decoded values) of the plurality of three-dimensional points encoded and then decoded. The decoded values stored in memory 118 are used for subsequent prediction of a plurality of three-dimensional points by predictor 113. Furthermore, the decoded value of the reference attribute information of the current point is used in prediction of dependent attribute information of the current point by predictor 113.

Arithmetic encoder 119 arithmetically encodes the quantized prediction residual. Note that arithmetic encoder 119 may binarize the quantized prediction residual and arithmetically encode the binarized prediction residual.

It should be noted that an encoding parameter or a quantized value (also called quantization parameter or a quantization step) to be used may differ between a case of encoding the dependent component (the dependent attribute information) and a case of encoding the reference component (the reference attribution information). For example, the reference component may be high in importance because the reference component is referred to by another component. Therefore, the reference component may be reversibly compressed, and the dependent component may be irreversibly compressed. For example, the irreversible compression is encoding processing including quantization processing, and the reversible compression is encoding processing not including quantization processing. Furthermore, the quantization step used for the reference component may be smaller than the quantization step used for the dependent component. Accordingly, encoding efficiency is improved while suppressing the deterioration of information as a whole. That is, three-dimensional data encoding device 100 sorts original attribute information items into a reference component and a dependent component and selects the encoding parameters appropriate for the reference component and the dependent component to perform the encoding. Accordingly, the improvement of the encoding efficiency can be expected.

Next, a configuration of attribute information decoder 201 and processing of decoding attribute information will be described. Herein, for example, a case will be described in which attribute information decoder 201 is a decoder (LoD based attribute decoder) that performs decoding using LoD.

FIG. 7 is a block diagram illustrating a configuration of attribute information decoder 201. Attribute information decoder 201 includes LoD generator 211, adjacent point searcher 212, predictor 213, arithmetic decoder 214, inverse quantizer 215, reconstructor 216, and memory 217.

LoD generator 211 generates LoD using decoded position information of a plurality of three-dimensional points. Adjacent point searcher 212 searches for an adjacent three-dimensional point (adjacent point) of a current point to be processed using the LoD generation result and distance information about distances between the three-dimensional points.

Predictor 213 generates predicted values of items of attribute information on the current point. Specifically, predictor 213 generates a predicted value of reference attribution information on the current point by referring to attribute information on the adjacent point different from the current point. In addition, predictor 213 generates a predicted value of dependent attribute information on the current point using encoded information of the reference attribution information on the current point.

Arithmetic decoder 214 arithmetically decodes the encoded attribute information included in the bitstream to generate a prediction residual (quantized prediction residual). Inverse quantizer 215 inverse-quantizes the arithmetically decoded prediction residual (quantized prediction residual). Reconstructor 216 sums the prediction value and the inverse-quantized prediction residual to generate a decoded value.

Memory 217 stores the decoded values of the plurality of three-dimensional points decoded. The decoded values stored in memory 217 are used for subsequent prediction of a plurality of three-dimensional points by predictor 213. Furthermore, the decoded value of the reference attribute information of the current point is used in prediction of dependent attribute information of the current point by predictor 113.

Next, prediction processing will be described in detail. First, a first example of the prediction processing will be described. FIG. 8 is a diagram illustrating a reference relationship in the first example of the prediction processing. In this example, a current point includes component A and component B. Component A is a reference component, and component B is a dependent component. Component A and component B are items of color information, each of which includes three dimension elements (also called sub-components) of green (G), blue (B), and red (R).

In the first example, inter-component prediction is used for all dimension elements included in the dependent attribute information. In the inter-component prediction, in order to reduce a code amount, a prediction residual between an attribute value (a value of the attribute information) of the dependent component of the current point and a predicted value based on an attribute value of the reference component of the current point is calculated, and the prediction residual is encoded.

In FIG. 8, arrows indicate dimension elements serving as reference targets including encoded information that is referred to in encoding the attribute component. A dimension element at a start point of an arrow refers to a dimension element at an end point of the arrow. In this example, each of a plurality of dimension elements included in the dependent component refers to the same dimension element included in the reference component. That is, a G element of the dependent component refers to a G element of the reference component, a B element of the dependent component refers to a B element of the reference component, and an R element of the dependent component refers to an R element of the reference component.

Here, when attribute values of component A at point N are denoted as $(R_{AN}, G_{AN}, B_{AN})$, and attribute values of component B at point N are denoted as $(R_{BN}, G_{BN}, B_{BN})$, predicted values of component B at point N are given by $(R_{AN} \cdot coeff_{ia}(R), G_{AN} \cdot coeff_{ia}(G), B_{AN} \cdot coeff_{ia}(R))$ using prediction coefficients $(coeff_{ia}(R), coeff_{ia}(G), coeff_{ia}(B))$. That is, the predicted values of component B at point N are values obtained by multiplying the attribute values of component A by the prediction coefficients. In addition, the prediction coefficients are derived using a predetermined method. For example, predicted values and residuals are derived using a plurality of candidate values of the prediction coefficients, and candidate values that minimize the code amount are selected as the prediction coefficients. In addition, for example, information indicating the prediction coefficients is stored in the bitstream and transmitted to the three-dimensional data decoding device.

Prediction residuals $(resi(R_{BN}), resi(G_{BN}), resi(B_{BN}))$ of component B that are differences between the attribute values and predicted values of component B are given by the following formulas.

$$resi(G_{BN}) = G_{BN} - G_{AN} \cdot coeff_{ia}(G)$$

$$resi(B_{BN}) = B_{BN} - B_{AN} \cdot coeff_{ia}(B)$$

$$resi(R_{BN}) = R_{BN} - R_{AN} \cdot coeff_{ia}(R)$$

On the other hand, in the decoding processing, the attribute values $(R_{BN}, G_{BN}, B_{BN})$ of component B at point N are given by the following formulas using the decoded prediction residuals $(resi(R_{BN}), resi(G_{BN}), resi(B_{BN}))$, the prediction coefficients $(coeff_{ia}(R), coeff_{ia}(G), coeff_{ia}(B))$, and the attribute values $(R_{AN}, G_{AN}, B_{AN})$ of component A.

$$G_{BN}=resi(G_{BN})+G_{AN}\cdot coeff_{ia}(G)$$

$$B_{BN}=resi(B_{BN})+B_{AN}\cdot coeff_{ia}(B)$$

$$R_{BN}=resi(R_{BN})+R_{AN}\cdot coeff_{ia}(R)$$

By using the above-described method, the prediction residuals can be decreased when the correlation between two items of attribute information is high. Accordingly, the code amount can be reduced.

It should be noted that when the number of items of attribute information is three or more, two or more of the items of attribute information may refer to one item of reference attribution information.

Next, a second example of the prediction processing will be described. FIG. 9 is a diagram illustrating a reference relationship in the second example of the prediction processing. In the second example, the inter-component prediction is used for some of a plurality of dimension elements included in a dependent component, and inter-sub-component prediction is used for the other dimension elements. The inter-sub-component prediction is a prediction mode in which a target dimension element to be processed refers to another dimension element belonging to the same component as the target dimension element.

Specifically, a representative dimension element (the G element in the example illustrated in FIG. 9) of the plurality of dimension elements included in the dependent component (component B) refers to a representative dimension element (the G element) of the reference component (component A). In addition, dimension elements (the B element and the R element in the example illustrated in FIG. 9) of the plurality of dimension elements included in the dependent component that are other than the representative dimension element refer to the representative dimension element included in the dependent component.

In this case, when the attribute values of the reference component at point N are denoted as $(R_{AN}, G_{AN}, B_{AN})$, and the attribute values of the dependent component at point N are denoted as $(R_{BN}, G_{BN}, B_{BN})$, the prediction residuals $(resi(R_{AN}), resi(G_{AN}), resi(B_{AN}))$ of the reference component are given as follows using inter-sub-component prediction coefficients $(coeff_{Ais}(R), coeff_{Ais}(B))$.

$$resi(G_{AN})=G_{AN}$$

$$resi(B_{AN})=B_{AN}-G_{AN}\cdot coeff_{Ais}(B)$$

$$resi(R_{AN})=R_{AN}-G_{AN}\cdot coeff_{Ais}(R)$$

The prediction residuals $(resi(R_{BN}), resi(G_{BN}), resi(B_{BN}))$ of the dependent component are given as follows using inter-sub-component prediction coefficients $(coeff_{Bis}(R), coeff_{Bis}(B))$ and an inter-component prediction coefficient $(coeff_{ia}(G))$.

$$resi(G_{BN})=G_{BN}-G_{AN}\cdot coeff_{ia}(G)$$

$$resi(B_{BN})=B_{BN}-G_{BN}\cdot coeff_{Bis}(B)$$

$$resi(R_{BN})=R_{BN}-G_{BN}\cdot coeff_{Bis}(R)$$

That is, in this example, the G element of component A is not subjected to the prediction. In contrast, the B element and the R element of component A are subjected to the inter-sub-component prediction by referring to the G element of component A. The G element of component B is subjected to the inter-component prediction by referring to the G element of component A. In addition, the B element and the R element of component B are subjected to the inter-sub-component prediction by referring to the G element of component B.

It should be noted that the inter-sub-component prediction coefficients and the inter-component prediction coefficient are derived using the predetermined method in advance as with the above-mentioned prediction coefficients. In addition, for example, information indicating the prediction coefficients is stored in the bitstream and transmitted to the three-dimensional data decoding device.

On the other hand, in the decoding processing, when prediction residuals of the reference component at point N are denoted as $(resi(R_{AN}), resi(G_{AN}), resi(B_{AN}))$, and prediction residuals of the dependent component at point N are denoted as $(resi(R_{BN}), resi(G_{BN}), resi(B_{BN}))$, attribute values $(R_{AN}, G_{AN}, B_{AN})$ of the reference component are given as follows using the inter-sub-component prediction coefficients $(coeff_{Ais}(R), coeff_{Ais}(B))$.

$$G_{AN} = resi(G_{AN})$$

$$B_{AN} = resi(B_{AN}) + G_{AN} \cdot coeff_{Ais}(B)$$

$$R_{AN} = resi(R_{AN}) + G_{AN} \cdot coeff_{Ais}(R)$$

Attribute values $(R_{BN}, G_{BN}, B_{BN})$ of the dependent component are given as follows using the inter-sub-component prediction coefficients $(coeff_{Bis}(R), coeff_{Bis}(B))$ and the inter-component prediction coefficient $(coeff_{ia}(G))$.

$$G_{BN} = resi(G_{BN}) + G_{AN} \cdot coeff_{ia}(G)$$

$$B_{BN} = resi(B_{BN}) + G_{BN} \cdot coeff_{Bis}(B)$$

$$R_{BN} = resi(R_{BN}) + G_{BN} \cdot coeff_{Bis}(R)$$

In this manner, it is possible to reduce the code amount by combining the inter-sub-component prediction, which can decrease a prediction residual when the correlation between dimension elements is high, and the inter-component prediction, which can decrease a prediction residual when the correlation in dimension elements between components is high.

Next, a third example of the prediction processing will be described. In the third example, predicted values of dependent attribute information are derived by referring to predicted values of reference attribution information. In addition, the predicted values of the reference attribution information are derived using the prediction in a prediction mode. That is, the predicted values of the dependent attribute information are derived by referring to the predicted values of the reference attribution information that are predicted by referring to attribute information on one or more adjacent points different from the current point.

FIG. 10 is a diagram for describing prediction processing in the prediction mode, and the prediction processing refers to adjacent points. As illustrated in FIG. 10, for example, the predicted values of the reference attribution information are calculated based on a plurality of adjacent points (neighborhood points) that are adjacent to (neighboring) the current point. For example, attribute values of any of the plurality of adjacent points are set as the prediction values. Alternatively, a set of mean values of a plurality of sets of attribute values of the plurality of adjacent points are set as the predicted values. It should be noted that identical predicted values may be used for all dimension elements included in attribute information on one current point irrespective of the number of dimension elements included in the attribute information.

For example, the three-dimensional data encoding device selects any one of a plurality of prediction modes and calculates the predicted values based on the selected prediction mode. In addition, the three-dimensional data encoding device stores information (pred_mode) indicating the selected prediction mode in the bitstream.

The plurality of prediction modes include, for example, the following modes. In a case of the prediction mode = 0, the three-dimensional data encoding device determines, as the predicted values, mean values of attribute values of a first adjacent point, attribute values of a second adjacent point, and attribute values of a third adjacent point illustrated in FIG. 10. For example, the first adjacent point is an encoded three-dimensional point that is the closest to the current point, the second adjacent point is an encoded three-dimensional point that is the second closest to the current point, and the third adjacent point is an encoded three-dimensional point that is the third closest to the current point.

In a case of the prediction mode = 1, the three-dimensional data encoding device determines the attribute values of the first adjacent point as the predicted values. In a case of the prediction mode = 2, the three-dimensional data encoding device determines the attribute values of the second adjacent point as the predicted values. In a case of the prediction mode = 3, the three-dimensional data encoding device determines the attribute values of the third adjacent point as the predicted values.

For example, the three-dimensional data encoding device calculates prediction values and prediction residuals using these prediction modes and selects a prediction mode that minimizes the code amount.

Furthermore, for example, attribute values of an adjacent point referred to are attribute values of the same attribute component as an attribute component to be processed included in the current point. For example, when the current point and the adjacent points each include a first attribute component and a second attribute component, the first attribute component of the current point is predicted by referring to the first attribute components of the adjacent points, and the second attribute component of the current point is predicted by referring to the second attribute components of the adjacent points.

For example, the three-dimensional data encoding device selects the prediction mode for each three-dimensional point and stores information (pred_mode) indicating the prediction mode in the bitstream for each three-dimensional point. It should be noted that pred_mode of each point need not be stored in the bitstream at all times. Based on a predetermined condition that can be tested in both the encoding device and the decoding device, the three-dimensional encoding device may use a predetermined prediction mode (e.g., pred_mode = 0) and need not store pred_mode in the bitstream when the condition is satisfied. In this case, when the condition is satisfied the three-dimensional data decoding device uses the above-described predetermined prediction mode. In addition, the number of selectable prediction modes may be limited when a predetermined condition is satisfied.

The three-dimensional data encoding device refers to predicted values of component A to predict attribute values of component B. Although here will be described an example in which the encoding is performed in the order of R, G, and B, the encoding order may be changed.

When the predicted values of the reference component determined in pred_mode are denoted as $(\text{pred}(R_{AN}), \text{pred}(G_{AN}), \text{pred}(B_{AN}))$, prediction residuals $(\text{resi}(R_{AN}), \text{resi}(G_{AN}), \text{resi}(B_{AN}))$ of the reference component are given as follows.

$$\text{resi}(R_{AN}) = R_{AN} - \text{pred}(R_{AN})$$

$$\text{resi}(G_{AN}) = G_{AN} - \text{pred}(G_{AN})$$

$$\text{resi}(B_{AN}) = B_{AN} - \text{pred}(B_{AN})$$

Prediction residuals $(\text{resi}(R_{BN}), \text{resi}(G_{BN}), \text{resi}(B_{BN}))$ of the dependent component are given as follows.

$$\text{resi}(R_{BN}) = R_{BN} - \text{pred}(R_{AN})$$

$$\text{resi}(G_{BN}) = G_{BN} - \text{pred}(G_{AN})$$

$$\text{resi}(B_{BN}) = B_{BN} - \text{pred}(B_{AN})$$

Furthermore, in this case, information indicating the prediction mode for the reference component is stored in the bitstream, and information indicating a prediction mode for the dependent component is not stored in the bitstream.

In addition, the three-dimensional data decoding device uses the prediction mode indicated by decoded pred_mode to calculate the predicted values of the reference component. When the predicted values of the reference component are denoted as $(\text{pred}(R_{AN}), \text{pred}(G_{AN}), \text{pred}(B_{AN}))$, prediction residuals of decoded reference component are denoted as $(\text{resi}(R_{AN}), \text{resi}(G_{AN}), \text{resi}(B_{AN}))$, and prediction residuals of decoded dependent component are denoted as $(\text{resi}(R_{BN}), \text{resi}(G_{BN}), \text{resi}(B_{BN}))$, the attribute values $(R_{AN}, G_{AN}, B_{AN})$ of the reference component are given as follows.

$$R_{AN} = \text{resi}(R_{AN}) + \text{pred}(R_{AN})$$

$$G_{AN} = \text{resi}(G_{AN}) + \text{pred}(G_{AN})$$

$$B_{AN} = \text{resi}(B_{AN}) + \text{pred}(B_{AN})$$

The attribute values $(R_{BN}, G_{BN}, B_{BN})$ of the dependent component are given as follows.

$$R_{BN} = \text{resi}(R_{BN}) + \text{pred}(R_{AN})$$

$$G_{BN} = resi(G_{BN}) + pred(G_{AN})$$

$$B_{BN} = resi(B_{BN}) + pred(B_{AN})$$

That is, the attribute values of the dependent component are calculated using the predicted values obtained in decoding the reference component and the prediction residuals of the dependent component decoded from the bitstream.

In this manner, using the predicted values used for the reference component as the predicted values of the dependent component dispenses with the encoding of the information (pred_mode) indicating the prediction mode for the dependent component. Accordingly, the code amount can be reduced. In addition, a processing time for calculating the prediction mode for the dependent component can also be reduced. It should be noted that, when the prediction residuals are generated, the predicted values calculated as described above may be multiplied by coefficients. For example, these coefficients are calculated in advance in such a manner as to decrease the prediction residuals. In addition, these coefficients may be stored in the bitstream.

Here is described an example of using the predicted values of the reference component for the dependent component. However, it should be noted that the predicted values of the dependent component may be calculated using the prediction mode used for the reference component. That is, the prediction mode may be used in common between the reference component and the dependent component. Specifically, the prediction mode is determined in the prediction of the reference component, and the predicted values of the reference component are determined using the prediction mode based on attribute values of reference components of the adjacent points. Furthermore, the predicted values of the dependent component are determined using the prediction mode based on attribute values of dependent components of the adjacent points. Differences between the attribute values of the reference component and prediction values of the reference component are calculated as the prediction residuals of the reference component, and differences between the attribute values of the dependent component and the prediction values of the dependent component are calculated as the prediction residuals of the dependent component.

Also in this case, the encoding of the information (pred_mode) indicating the prediction mode for the dependent component is dispensed with, and thus the code amount can be reduced.

Next, a fourth example of the prediction processing will be described. In the fourth example, a prediction mode and predicted values are not shared between component A and component B. A prediction mode and predicted values are determined for each of component A and component B, and prediction residuals are calculated for each of component A and component B. Furthermore, differences between two sets of calculated prediction residuals are encoded as prediction residuals of component B.

Specifically, for each three-dimensional point, the three-dimensional data encoding device determines a prediction mode for component A, calculates the predicted values based on the determined prediction mode, and derives first prediction residuals using the calculated predicted values. Similarly, for each three-dimensional point, the three-dimensional data encoding device determines a prediction mode for component B, calculates the predicted values based on the determined prediction mode, and derives second prediction residuals using the calculated predicted values.

In addition, the three-dimensional data encoding device stores pred_mode in the bitstream for each component of each three-dimensional point.

In addition, the three-dimensional data encoding device directly encodes the first prediction residual for the reference component. In contrast, for the dependent component, the three-dimensional data encoding device predicts the second prediction residual of the dependent component using the first prediction residual of the reference component, thus generating a third prediction residual. For example, the third prediction residual is a difference between the first prediction residual and the second prediction residual.

For example, the first prediction residuals ($resi(R_{AN})$, $resi(G_{AN})$, $resi(B_{AN})$) of the reference component are given as follows.

$$resi(R_{AN}) = R_{AN} - pred(R_{AN})$$

$$resi(G_{AN}) = G_{AN} - pred(G_{AN})$$

$$resi(B_{AN}) = B_{AN} - pred(B_{AN})$$

The second prediction residuals ($resi(R_{BN})$, $resi(G_{BN})$, $resi(B_{BN})$) of the dependent component are given as follows.

$$resi(R_{BN})=R_{BN}-pred(R_{BN})$$

$$resi(G_{BN})=G_{BN}-pred(G_{BN})$$

$$resi(B_{BN})=B_{BN}-pred(B_{BN})$$

The third prediction residuals ($resi2(R_{BN})$, $resi2(G_{BN})$, $resi2(B_{BN})$) of the dependent component are given as follows.

$$resi2(R_{BN})=resi(R_{BN})-resi(R_{AN})$$

$$resi2(G_{BN})=resi(G_{BN})-resi(G_{AN})$$

$$resi2(B_{BN})=resi(B_{BN})-resi(B_{AN})$$

It should be noted that, in the calculation of the third prediction residuals, at least either the first prediction residuals or the second prediction residuals may be multiplied by coefficients. For example, these coefficients are calculated in advance in such a manner as to decrease the third prediction residuals. In addition, these coefficients may be stored in the bitstream.

On the other hand, the three-dimensional data decoding device uses first prediction residuals of a decoded reference component and third prediction residuals of the decoded dependent component to derive the second prediction residuals of the dependent component. The three-dimensional data decoding device uses the derived second prediction residuals to reconstruct the attribute values of the dependent component.

For example, the attribute values ($R_{AN}$, $G_{AN}$, $B_{AN}$) of the reference component are given as follows.

$$R_{AN}=resi(R_{AN})+pred(R_{AN})$$

$$G_{AN}=resi(G_{AN})+pred(G_{AN})$$

$$B_{AN}=resi(B_{AN})+pred(B_{AN})$$

The second prediction residuals ($resi(R_{BN})$, $resi(G_{BN})$, $resi(B_{BN})$) of the dependent component are given as follows.

$$resi(R_{BN})=resi2(R_{BN})-pred(R_{BN})$$

$$resi(G_{BN})=resi2(G_{BN})-pred(G_{BN})$$

$$resi(B_{BN})=resi2(B_{BN})-pred(B_{BN})$$

The attribute values ($R_{BN}$, $G_{BN}$, $B_{BN}$) of the dependent component are given as follows.

$$R_{BN}=resi(R_{BN})+pred(R_{BN})$$

$$G_{BN}=resi(G_{BN})+pred(G_{BN})$$

$$B_{BN}=resi(B_{BN})+pred(B_{BN})$$

The above is the description of the case where the prediction mode and the predicted values are not shared between the reference component and the dependent component. However, it should be noted that the prediction mode and the predicted values may be shared as described in the third example. That is, the predicted values of the reference component may be used in the calculation of the second prediction residuals of the dependent component. Accordingly, processing of predicting the dependent component can be reduced. Furthermore, not encoding the prediction mode can reduce the code amount. It should be noted that the prediction mode may be shared rather than the predicted values.

Alternatively, as another method, the three-dimensional data encoding device may encode differences between the predicted values of the dependent component and the residuals of the reference component as encoded data of the dependent component. That is, the three-dimensional data encoding device calculates first predicted values of the reference component in a prediction mode, calculates first residuals, which are differences between attribute information on the reference component and the first predicted values of the reference component, and encodes the first residuals as encoded data of the reference component. Next, the three-dimensional data encoding device calculates second predicted values of the dependent component in the prediction mode and encodes differences between the second predicted values and the first residuals as the encoded data of the dependent component.

Next, a configuration of the bitstream (encoded data) generated by the three-dimensional data encoding device will be described. FIG. 11 is a diagram illustrating a configuration of type length value (TLV) data included in the bitstream.

The TLV data (TLV unit) includes Type, Length, and Value. Type and Length form a header of the TLV data, and Type includes an identifier of data stored in Value. Value is a payload of the TLV data and includes the encoded data.

FIG. 12 is a diagram illustrating an example configuration of a bitstream. As illustrated in FIG. 12, the bitstream includes SPS, GPS, APS, GDU header, GDU, ADU header, ADU, DADU header, and DADU.

SPS (Sequence Parameter Set) is metadata (a parameter set) that is common to a plurality of frames. APS (Attribute Parameter Set) is metadata (parameter set) concerning encoding of attribute information (reference attribute information and dependent attribute information). GPS (Geometry Parameter Set) is metadata (parameter set) concerning encoding of geometry information. For example, APS and GPS are metadata common to a plurality of frames.

GDU (Geometry Data Unit) is a data unit of encoded data of the geometry information. ADU (Attribute Data Unit) is a data unit of encoded data of the attribute information (reference attribution information). DADU (Dependent Attribute Data Unit) is a data unit of encoded data of the dependent attribute information. GDU header, ADU header, and DADU header are headers (control information) of GDU, ADU, and DADU, respectively. The data items illustrated in FIG. 12 are stored in a plurality of TLV units.

FIG. 13 is a diagram illustrating an example of a syntax of a TLV unit. As illustrated in FIG. 13, the TLV unit includes type and length. In addition, the TLV unit includes data corresponding to type.

Specifically, encoded data of a normal attribute component includes a header (attribute_data_unit_header()) of an attribute data unit and the attribute data unit (attribute_data_unit_data()). In such a TLV unit, type indicates "attribute_data_unit".

Here, the encoded data of the normal attribute component is encoded data of a reference component and does not refer to another attribute data unit. The encoded data is encoded data encoded by referring to a corresponding geometry data unit.

In contrast, encoded data encoded by referring to another attribute component includes a header (dependent_attribute_data_unit_header()) of a dependent attribute data unit and the dependent attribute data unit (dependent_attribute_data_unit_data()). In such a TLV unit, type indicates "dependent_attribute_data_unit". The dependent attribute data unit stores a corresponding geometry data unit and encoded data encoded by referring to a corresponding attribute data unit serving as a reference target.

In addition, encoded data of a component of geometry information includes a header (geometry_data_unit_header()) of a geometry data unit and the geometry data unit (geometry_data_unit_data()). In such a TLV unit, type indicates "geometry_data_unit".

Here is described an example in which an attribute data unit and a dependent attribute data unit are identified with type of TLV. However, it should be noted that type may indicate an attribute data unit, and an attribute data unit header may store information indicating whether the attribute data unit is a normal attribute data unit or a dependent attribute data unit.

In addition, first color information and second color information are each encoded as one attribute component using an encoding method for attribute information such as LoD based attribute or Transform based attribute. That is, the above is the description of an example of using LoD based attribute. However, the method according to the present embodiment is also applicable to a case of using Transform based attribute.

Note that LoD base attribute is one of conversion methods using LoD (Level of Detail), and is a method of calculating a prediction residual. LoD is also a method of layering three-dimensional points in accordance with geometry information and a method of layering three-dimensional points in accordance with distances between points (in accordance with the density of points).

Transform based attribute is, for example, a region adaptive hierarchical transform (RAHT) system or the like. RAHT is a method of converting attribute information using geometry information on three-dimensional points. By applying RAHT conversion, Haar transform, or the like to attribute information, encoding coefficients (a high frequency component and a low frequency component) of each layer are generated, and their values or prediction residuals between the values and encoding coefficients of an adjacent node are subjected to quantization, entropy encoding, or the like.

That is, the method of encoding residuals is also applicable to the case of using Transform based attribute by using attribute information, encoding coefficients, or prediction residuals of the reference component to predict attribute information, encoding coefficients, or prediction residuals of the dependent component, as with the case of using LoD based attribute.

In other words, the correlation used in the above-described prediction processing may be (1) the correlation between first attribute information and second attribute information on one three-dimensional point, (2) the correlation between a plurality of first encoding coefficients obtained by converting (RAHT or Haar) a plurality of items of first attribute information on a plurality of three-dimensional points and a plurality of second encoding coefficients obtained by converting (RAHT or Haar) a plurality of items of second attribute information on the plurality of three-dimensional points, or (3) the correlation between first prediction residuals generated by subjecting a plurality of first encoding coefficients to inter or intra prediction and second prediction residuals generated by subjecting a plurality of second encoding coefficients to the inter or intra prediction.

Here, in the conversion such as the RAHT conversion, the Haar transform, or the like, a plurality of encoding coefficients are generated by converting items of attribute information on a plurality of three-dimensional points. Therefore, the correlation between encoding coefficients of the dependent component (e.g., first attribute information) and encoding coefficient of the reference component (e.g., second attribute information) includes not only two types of attribute information on the same three-dimensional point but also the correlation between two items of attribute information on different three-dimensional points.

That is, not only the correlation between two types of attribute information included in one three-dimensional point but also the correlation between a plurality of items of first attribute information included in a plurality of three-dimensional points and a plurality of items of second attribute information included in the plurality of three-dimensional points may be used. In other words, the correlation between first attribute information on a first three-dimensional point that is included in a plurality of three-dimensional points and second attribute information on a second three-dimensional point that is included in the plurality of three-dimensional points and different from the first three-dimensional point may be used.

In addition, the first color information is encoded as a first attribute component that is three-dimensional, and the second color information is encoded as a second attribute component that is three-dimensional. Encoded data of the first attribute component is stored in ADU, and encoded data of the second attribute component, which is encoded referring to the first attribute information, is stored in DADU. In ADU header and DADU header, attribute component identifiers attr_id = 0 and attr_id = 1 are stored, respectively.

SPS includes an attribute identifier (attribute_type = color) indicating that the first attribute component and the second attribute component are both color information, attribute component identifiers (attr_id) of the first attribute component and the second attribute component, and information indicating the numbers of dimensions of the first attribute component and the second attribute component.

Next, an example syntax of attribute_parameter included in SPS will be described. FIG. 14 is a diagram illustrating an example syntax of attribute_parameter(i).

attribute_parameter(i) is a parameter pertaining to the i-th item of attribute information, and attribute_parameter stores information indicating the dependence relationship between a plurality of items of attribute information.

Specifically, in a case of attr_param_type = 4, attribute_parameter includes reference_attr_id[i]. attr_param_type = 4 indicates that the attribute component depends on another component (is a dependent component).

Here, it can be said that setting zero or greater to num_attribute_parameter and enabling attr_param_type = 4 is enabling a flag indicating that the attribute component depends on another component. In addition, it can be said that this is enabling a flag indicating whether original attribute information can be reconstructed from the attribute component alone.

In addition, num_attribute_parameter is included in SPS and indicates the number of attribute_parameter included in the SPS.

reference_attr_id indicates an attribute component identifier of a component serving as a reference target (dependence target).

When an attribute component of attr_id = 1 is a dependent component referring to a reference component that is an attribute component of attr_id = 0, attribute_parameter of attr_id = 1 includes attr_param_type = 4 and attr_id of the component serving as a reference target (i.e., 1).

It should be noted that SPS may include a flag indicating whether dependent attribute information is included or whether there is the possibility that dependent attribute information is included.

FIG. 15 is a diagram illustrating an example of a syntax of a dependent attribute data unit header (dependent_attribute_data_unit_header). The dependent attribute data unit header includes reference_attr_slice_id, attr_id, reference_attr_id, inter_attribute_pred_enabled, predmode_reference_flag, and inter_attribute_pred_coeff[i][c].

reference_attr_slice_id indicates a slice ID of an attribute component serving as a reference target. Here, the slice ID is an identifier of a slice in a point cloud. Therefore, the slice ID of the attribute component serving as a reference target is the same as a slice ID of geometry information serving as a reference target and a slice ID of a dependent component to be processed. Therefore, reference_attr_slice_id may indicate the slice ID of the geometry information serving as a reference target or may indicate the slice ID of the dependent component to be processed. attr_id indicates an index of an attribute component.

reference_attr_id is similar to reference_attr_id of attribute_parameter and indicates a component identifier of an attribute component being a component serving as a reference target (dependence target). reference_attr_id is included in at least one of SPS and the dependent attribute data unit header.

inter_attribute_pred_enabled indicates whether the inter-component prediction is enabled. For example, inter_attribute_pred_enabled having a value of 1 indicates that the inter-component prediction is enabled, and inter_attribute_pred_enabled having a value of 0 indicates that the inter-component prediction is disabled.

predmode_reference_flag indicates whether to refer to a prediction mode (pred_mode) of the reference component.

When inter_attribute_pred_enabled is 1, the dependent attribute data unit header includes inter_attribute_pred_coeff[i][c]. Here, lod_max_levels shown in FIG. 15 indicates the number of layers of LoD. num_dimension indicates the number of dimensions that is the number of dimension elements included in the attribute component.

inter_attribute_pred_coeff indicates a prediction coefficient. As illustrated in FIG. 15, the prediction coefficient is stored for each LoD layer and for each sub-component (dimension).

It should be noted that a prediction coefficient may be made common to a plurality of LoD layers, a prediction coefficient may be made common to a plurality of sub-components, or a prediction coefficient may be made common to a plurality of LoD layers and a plurality of sub-components. That is, the prediction coefficient may be generated for each of one or more LoD or may be generated for each of one or more dimension elements.

It should be noted that inter_attribute_pred_coeff_diff, which indicates a difference of a prediction coefficient, may be used instead of inter_attribute_pred_coeff. For example, inter_attribute_pred_coeff_diff at the beginning of LoD indicates a difference between a predetermined initial value and a prediction coefficient to be processed. The second inter_attribute_pred_coeff_diff from the beginning of LoD indicates a difference between the prediction coefficient at the beginning of LoD and a (second) prediction coefficient to be processed. For each of the third and subsequent inter_attribute_pred_coeff_diff, a difference between a previous prediction coefficient and a prediction coefficient to be processed is used as with the second inter_attribute_pred_coeff_diff. Accordingly, the data amount of transmitted prediction coefficients can be reduced.

Alternatively, in a case where a common prediction coefficient is used for a data unit, information indicating the prediction coefficient may be stored in a header of the data unit. Alternatively, in a case where a common prediction coefficient is used for a plurality of data units, information indicating the prediction coefficient may be stored in APS. Alternatively, in a case where a common prediction coefficient is used for a sequence, information indicating the prediction coefficient may be stored in SPS.

Furthermore, FIG. 15 illustrates an example in which control signals such as reference_attr_id, inter_attribute_pred_enabled, and predmode_reference_flag are made common to a plurality of LoD and a plurality of dimension elements. However, at least one of these control signals may be provided for each LoD or may be provided for each dimension element.

Next, an example of a syntax of a dependent attribute data unit will be described. FIG. 16 is a diagram illustrating an example of a syntax of a dependent attribute data unit (dependent_attribute_data_unit) in a case where the first example or the second example of the prediction processing illustrated in FIG. 8 and FIG. 9 is used. As illustrated in FIG. 16, the dependent attribute data unit includes resi.

In FIG. 16, point_count indicates the number of points included in the data unit. num_dimension indicates the number of dimensions that is the number of dimension elements included in the attribute component. In addition, resi is generated for each point and for each dimension element.

resi indicates a prediction residual. Specifically, as described in the above-mentioned first example and second example of the prediction processing, resi indicates, for each point in the data unit, a residual (difference) between a sub-component to be processed and a predicted value calculated by referring to reference sub-component or another sub-component in an attribute component to be processed.

It should be noted that when resi of some sub-component is resi = 0 for a plurality of consecutive points, the dependent attribute data unit may include zero_run_length, which indicates the number of consecutive points of resi = 0, instead of resi.

In addition, resi may be arithmetically encoded in such a manner as to decompose resi or change a value of resi according to a condition of another sub-component before the arithmetic encoding so as to be advantageous to the arithmetic encoding of resi. It should be noted that being advantageous to the arithmetic encoding means that, for example, a data amount is reduced after the arithmetic encoding.

FIG. 17 is a diagram illustrating an example of a syntax of a dependent attribute data unit (dependent_attribute_data_unit) in a case where the third example or the fourth example of the prediction processing illustrated in FIG. 10 is used. As illustrated in FIG. 17, the dependent attribute data unit includes pred_mode and resi (or resi2).

pred_mode is provided for each point and for each sub-component and indicates a prediction mode used for the sub-component. In addition, when a prediction mode (pred_mode) of a reference component is not referred to (predmode_reference_flag = 0), the dependent attribute data unit includes pred_mode. On the other hand, when the prediction mode (pred_mode) of the reference component is referred to (predmode_reference_flag = 1), the dependent attribute data unit does not include pred_mode.

In addition, in a case where the third example is employed, the dependent attribute data unit includes resi that is generated for each point and for each dimension element. resi indicates a residual (difference) between a predicted value generated using pred_mode referred to or pred_mode included in the dependent attribute data unit and a sub-component to be processed.

In addition, in a case where the fourth example is employed, the dependent attribute data unit includes resi2 that is generated for each point and for each dimension element. resi2 is a residual (difference) between a residual between a predicted value generated using pred_mode referred to or pred_mode included in the dependent attribute data unit and a sub-component to be processed, and a residual of a reference sub-component.

It should be noted that when resi of some sub-component is resi = 0 for a plurality of consecutive points, the dependent attribute data unit may include zero_run_length, which indicates the number of consecutive points of resi = 0, instead of resi.

In addition, resi may be arithmetically encoded in such a manner as to decompose resi into particular bits or perform transformation such that a plurality of resi of a plurality of sub-components are combined into one data item before the arithmetic encoding so as to be advantageous to the arithmetic encoding of resi. It should be noted that being advantageous to the arithmetic encoding means that, for example, a data amount is reduced after the arithmetic encoding. In addition, pred_mode and resi of a particular sub-component may be combined into one data item.

FIG. 18 is a flowchart of encoding processing of attribute information (an attribute component) by the three-dimensional data encoding device. First, the three-dimensional data encoding device determines whether a target component that is an attribute component to be processed is a dependent component (S121).

When the target component is a dependent component (Yes in S121), the three-dimensional data encoding device stores a reference component ID (e.g., reference_attr_id) and information indicating a dependence relationship (e.g., attr_param_type = 4) in metadata (S122). The three-dimensional data encoding device encodes the target component by referring to a reference component (S123).

On the other hand, when the target component is not a dependent component (No in S121), the three-dimensional data encoding device encodes the target component in isolation without referring to another attribute component (S124).

FIG. 19 is a flowchart of decoding processing of attribute information (an attribute component) by the three-dimensional data decoding device. First, the three-dimensional data decoding device obtains (decodes) a reference component ID (e.g., reference_attr_id) and information (e.g., attr_param_type) indicating a dependence relationship from the metadata included in a bitstream (S131).

Next, the three-dimensional data decoding device determines whether a target component that is an attribute component to be processed is a dependent component (S132). For example, the three-dimensional data decoding device performs the determination based on the information that is obtained in step S131 and indicates the dependence relationship.

When the target component is a dependent component (Yes in S132), the three-dimensional data decoding device decodes the target component by referring to a reference component (S133).

On the other hand, when the target component is not a dependent component (No in S132), the three-dimensional data decoding device decodes the target component in isolation without referring to another attribute component (S134).

It should be noted that the processing illustrated in FIG. 18 and FIG. 19 may be performed on a frame basis or on a slice basis.

Variations and the like of the method of encoding dependent attribute information will be described below. For example, the following method may be used as a method of deriving the above-mentioned prediction coefficient. Using each of a plurality of candidate values of the prediction coefficients, the three-dimensional data encoding device calculates a total sum of residuals of a plurality of points for each of the plurality of candidate values. The three-dimensional data encoding device may determine, as the prediction coefficient, a candidate value that minimizes the calculated total sum.

As another derivation method, the three-dimensional data encoding device calculates a total sum of items of dependent attribute information on a plurality of points and a total sum of items of reference attribution information on the plurality of points. Using each of a plurality of candidate values of the prediction coefficients, the three-dimensional data encoding device may calculate a difference between a value of multiplication of the candidate value and the total sum of the items of reference attribution information and the total sum of the items of dependent attribute information for each of the plurality of candidate values and may determine, as the prediction coefficient, a candidate value that minimizes the difference.

It should be noted that, in a mode to perform irreversible encoding (e.g., an encoding mode involving quantization processing), in derivation of the prediction coefficient, the three-dimensional data encoding device may calculate the prediction coefficient using an input attribute value before encoding or may calculate the prediction coefficient using a decoded value after encoding and decoding (after quantization and inverse-quantization) to increase accuracy.

For example, when encoding three or more attribute components of color information, the three-dimensional data encoding device may set any one of the color information as a reference component and encode the other attribute components by referring to the same reference component. In this case, by first decoding the reference component, the three-dimensional data decoding device can decode the other attribute components using data of the decoded reference component. Therefore, it is possible to improve random accessibility in decoding a given attribute component.

Alternatively, a plurality of reference components may be set. Accordingly, it may be possible to improve random accessibility in a case of a large number of attribute components.

Alternatively, in a case where a reference component and a dependent component differ from each other in the number of dimensions, a particular sub-component (dimension element) included in the reference component may be referred to. In this case, information that enables identification of which of sub-components has been referred to may be stored in the bitstream. Alternatively, which of sub-components is to be referred to may be predetermined.

The above describes an example in which attribute_parameter is stored in SPS. However, it should be noted that attribute_parameter may be stored in APS or SEI. For example, in a case where the dependence relationship changes with each frame, the dependency information (e.g., attribute_parameter) may be stored in SEI of each frame. For example, as SEI of each frame, frame_attr_param_SEI can be cited.

It should be noted that in a case where the dependency information is stored in both SEI of each frame and SPS, the three-dimensional data decoding device preferentially uses SEI of each frame.

FIG. 20 is a diagram illustrating an example syntax of frame_attr_param_SEI in this case. In this example, attribute_idx specifies the attribute component to which the dependency information (attribute_parameter) is applied. That is, the dependency information is specified for each attribute component. Note that sps_idx illustrated in FIG. 20 is an index of SPS, and frame_idx is an index of a frame. num_parameter indicates the number of dependency information (attribute_parameter).

Furthermore, common conversion information may be specified for all the attribute components. For example, the conversion information may be included in SEI that is common to all the attribute components, such as attribute_structure_SEI. In that case, the three-dimensional data decoding device can determine the dependence relationship between the plurality of attribute components by analyzing attribute_structure_SEI.

Furthermore, SEI used for partial decoding may be defined. FIG. 21 is a diagram illustrating an example syntax of such SEI (angle_partial_access_SEI).

For example, when different color information is encoded for each viewpoint, SEI includes viewpoint (angle) information and an attribute component identifier (attr_id). Furthermore, for a dependent component (dependent_flag = 1), the attribute component identifier (reference_attr_id) of the reference component is indicated.

Note that num_angle illustrated in FIG. 21 indicates the number of viewpoints, and angle indicates a viewpoint. dependent_flag indicates whether the attribute component is a dependent component or not.

Although not illustrated, information indicating the type of the conversion such as pre-processing and post-processing (the offset value, or the scaling value, for example) may be included in SEI. Such information may be included in at least one of SPS and SEI.

FIG. 22 is a flowchart of decoding processing in the case where the partial decoding is performed. For example, the processing illustrated in FIG. 22 is performed in a system layer.

The three-dimensional data decoding device first decodes and analyzes SEI for partial decoding (S211). The three-dimensional data decoding device then analyzes viewpoint information, and obtains an attribute component identifier (ID) of attribute information for a viewpoint to be decoded (S212). When the attribute component is a dependent component, the three-dimensional data decoding device then obtains the attribute component identifier of the reference component (S213). The three-dimensional data decoding device then searches attribute data units, extracts a data unit having the obtained attribute component identifier, and decodes the extracted data unit (S214).

In this way, the three-dimensional data decoding device obtains, from the bitstream, attribute component identifiers (ID) of attribute components (reference component and dependent component) for a particular viewpoint, and extracts a data unit using the attribute component identifiers.

Note that the extracted data unit need not be decoded, and a bitstream or a file may be reconfigured with the extracted data unit. For example, an edge requests a bitstream or file including attribute information for a particular viewpoint from a server. The server may generate a bitstream or file including extracted attribute information for the particular viewpoint and transmit the bitstream or file to the edge. In this way, the data amount of the data to be transmitted can be reduced, so that it may be possible to reduce the communication time.

[Embodiment 2]

In the present embodiment, a method in which sub-components are integrated and encoded will be described. FIG. 23 is a block diagram illustrating a configuration of three-dimensional data encoding device 300 according to the present embodiment. Three-dimensional data encoding device 300 encodes a plurality of items of attribute information (first to second attribute information) to generate encoded attribute information and encoded integration information. Three-dimensional data encoding device 300 includes integrator 301 and attribute information encoder 302. Note that FIG. 23 illustrates only processors involved in the encoding of attribute information. Three-dimensional data encoding device 300 may include other processors, such as a geometry information encoder that encodes geometry information.

Integrator 301 integrates the plurality of items of attribute information (the first to second attribute information) to generate integrated attribute information.

FIG. 24 is a diagram illustrating subcomponent integration. As illustrated in FIG. 24, attribute information includes, for example, color information including three-dimensional elements (first attribute information) and reflectance information including one-dimensional element (second attribute information). In this case, integrator 301 integrates the color information and the reflectance information to generate the integrated attribute information including four-dimensional elements.

Attribute information encoder 302 encodes the integrated attribute information as one attribute component to generate the encoded attribute information. In the example illustrated in FIG. 24, attribute information encoder 302 encodes the integrated attribute information as one attribute component including four-dimensional sub-components. It should be noted that attribute information encoder 302 may have, for example, the same function as attribute information encoder 101 illustrated in FIG. 2.

In addition, attribute information encoder 302 generates integrated information, which is metadata about the integration. For example, in the example illustrated in FIG. 24, attribute information encoder 302 generates the integrated information indicating that the integrated attribute information has been generated by combining the color information and the reflectance information. In addition, attribute information encoder 302 encodes the integrate information to generate encoded integration information. In addition, three-dimensional data encoding device 300 generates a bitstream including the encoded attribute information and the encoded integration information.

FIG. 25 is a block diagram illustrating a configuration of three-dimensional data decoding device 400 according to the present embodiment. Three-dimensional data decoding device 400 decodes a bitstream to generate a plurality of items of attribute information (first to second attribute information). Three-dimensional data decoding device 400 includes attribute information decoder 401 and separator 402. Note that FIG. 25 illustrates only processors involved in the decoding of the attribute information. Three-dimensional data decoding device 400 may include other processors, such as a geometry information decoder that decodes geometry information.

Attribute information decoder 401 decodes encoded attribute information included in a bitstream to generate integrated attribute information. In addition, attribute information decoder 401 decodes encoded integration information included in the bitstream to generate integrated information.

Separator 402 separates the integrate attribute information using the integrate information to generate the plurality of items of attribute information (the first to second attribute information). For example, in the example illustrated in FIG. 24, separator 402 reconstructs color information (the first attribute information) and reflectance information (the second attribute information).

Here, there are cases where there is a correlation between a plurality of items of attribute information on some points even when types of the items of attribute information are different from each other. For example, there are cases where there is a correlation between color information and a reflectance. In addition, a combination of types of attribute information having a correlation is, for example, a combination of color information, reflectance, transmittance, infrared information, and the like.

In this manner, by integrating and encoding a plurality of items of attribute information having a high correlation, the metadata can be shared, and thus the data amount can be reduced. For example, by using the same prediction mode for an integrated plurality of sub-components to perform the encoding, a data amount of information indicating the prediction mode can be reduced. Furthermore, for example, it is possible to perform prediction processing by the inter-sub-component prediction between elements of integrated items of attribute information. That is, although the inter-sub-component prediction cannot be applied to attribute information of 1 in the number of dimensions, the integration of a plurality of items of attribute information makes the inter-sub-component prediction applicable, and a total code amount can be reduced more than a case where the plurality of items of attribute information are individually encoded.

Next, a method of encoding integrated attribute information and a method of signaling integrated attribute information will be described. First, a method of indicating that a target attribute component to be encoded is attribute information into which a plurality of items of attribute information are integrated will be described.

For example, an attribute type indicating attribute information into which a plurality of items of attribute information are integrated, such as "integration," may be defined as attribute_type, which is included in SPS and indicates a type of attribute information. Alternatively, SPS may store attribute_type that indicates any one of attribute types of the plurality of items of attribute information before the integration.

For example, SPS or attribute_param() may store integrated_attr_id[i], which indicates an attribute component identifier of the attribute component integrated into. In such a case, sub_component_type, which indicates types and an order of sub-components constituting the attribute component, may be predefined and stored in SPS or attribute_param().

For example, sub_component_type = 0 indicates (r, G, B, R), sub_component_type = 1 indicates (G, B, R, r), and sub_component_type = 2 indicates (r, R, G, B).

num_dimension indicating the number of dimensions of the attribute component indicates a total number of dimensions that is the total of the numbers of dimensions of the plurality of components before the integration. For example, when three-dimensional color and one-dimensional reflectance are integrated together, the number of dimensions of the integrated attribute component is four.

Next, a method of encoding an integrated attribute component will be described. For example, an attribute component into which attribute components of m and n in the numbers of dimensions are integrated is encoded as a component of m + n in the number of dimensions, and the encoded data is stored in attribute_data_unit_data(). Here, m and n are each any natural number.

By encoding a plurality of items of attribute information as one attribute component, one type of data unit can be used. Thus, a data amount of a header or the like can be reduced.

It should be noted that the three-dimensional data encoding device may or need not encode an attribute component that reaches zero in the number of dimensions as the result of the integration.

Next, a method of decoding integrated attribute information to reconstruct original attribute components will be described. The three-dimensional data decoding device can decode a bitstream generated by the method described above as an integrated attribute component. The three-dimensional data decoding device can grasp attribute component identifiers of attribute components integrated together by referring to an integration-destination component identifier (integrated_attr_id[i]) that is stored in SPS or attribute_param(), and thus an original plurality of attribute components can be reconstructed from the integrated attribute component.

Next, a first example of prediction processing of integrated attribute information will be described. In the first example, a predictive encoding scheme using a prediction mode is used as a scheme of encoding the integrated attribute information. In addition, an example in which color including three-dimensional sub-components: R, G, and B and reflectance r including one-dimensional sub-component are integrated together and encoded as a four-dimensional component will be described. As the predictive encoding scheme, the prediction processing described with reference to FIG. 10 and the like can be used.

When integrated attribute information at point N is denoted as $(R_N, G_N, B_N, r_N)$, and predicted values determined in a prediction mode (pred_mode) are denoted as $(pred(R_N), pred(G_N), pred(B_N), pred(r_N))$, prediction residuals $(resi(R_N), resi(G_N), resi(B_N), resi(r_N))$ are given as follows.

$$resi(R_N) = R_N - pred(R_N)$$

$$resi(G_N) = G_N - pred(G_N)$$

$$resi(B_N) = B_N - pred(B_N)$$

$$resi(r_N) = r_N - pred(r_N)$$

In addition, when prediction residuals of integrated attribute information at point N after decoding are denoted as $(resi(R_N), resi(G_N), resi(B_N), resi(r_N))$, and predicted values determined in the prediction mode are denoted as $(pred(R_N), pred(G_N), pred(B_N), pred(r_N))$, the integrated attribute information $(R_N, G_N, B_N, r_N)$ in the three-dimensional data decoding device is given as follows.

$$R_N = resi(R_N) + pred(R_N)$$

$$G_N = resi(G_N) + pred(G_N)$$

$$B_N = resi(B_N) + pred(B_N)$$

$$r_N = resi(r_N) + pred(r_N)$$

Here, since pred_mode is common to all sub-components in an attribute component, pred_mode can be made common to more sub-components by integrating a plurality of attribute components. That is, the number of pred_mode transmitted from the three-dimensional data encoding device to the three-dimensional data decoding device can be reduced, and thus the code amount can be reduced.

In addition, for attribute information of 1 in the number of dimensions, such as reflectance, pred_mode for one point per dimension is one. In contrast, for attribute information of 3 in the number of dimensions, such as color information, pred_mode for one point per dimension is 1/3. Thus, it can be said that the smaller the number of dimensions, the less a transmission efficiency of pred_mode becomes. Therefore, integration of attributes can increase the number of dimensions and decreases the number of pred_mode for one point per dimension, and thus the transmission efficiency of pred_mode can be improved.

Next, a second example of the prediction processing of integrated attribute information will be described. In the second example, the inter-sub-component prediction is used as the scheme of encoding the integrated attribute information. In the predictive encoding scheme, a prediction residual between an attribute value to be encoded and a predicted value is encoded to reduce the code amount. As the prediction value, for example, an attribute value of another sub-component in an attribute component is used.

FIG. 26, FIG. 27, and FIG. 28 are diagrams each illustrating an example of reference relationship (dependence relationship) in the inter-sub-component prediction. For example, the prediction is performed using the reference relationship between sub-components illustrated in FIG. 26, FIG. 27, or FIG. 28. It should be noted that arrows in the figures each show a reference relationship of the prediction. A start point of each arrow is a dependent sub-component, and an end point of the arrow is a reference sub-component. In addition, although the example shown here is an example in which the color information is in RGB, the color information may be another color information such as color information in YCbCr.

In the example illustrated in FIG. 26, when the integrated attribute information at point N is denoted as $(R_N, G_N, B_N, r_N)$, and the reference sub-component is denoted as $G_N$, predicted values of $(B_N, R_N, r_N)$ are calculated by multiplying $G_N$ by prediction coefficients (coeff(B), coeff(R), coeff(r)). As a result, prediction residuals $(resi(B_N), resi(R_N), resi(r_N))$ of a sub-component to be predicted in the three-dimensional data encoding device are given as follows.

$$resi(G_N) = G_N$$

$$resi(B_N) = B_N - G_N \cdot coeff(B)$$

$$resi(R_N) = R_N - G_N \cdot coeff(R)$$

$$resi(r_N) = r_N - G_N \cdot coeff(r)$$

In the example illustrated in FIG. 27, a reference sub-component is r, and the prediction residuals are given as follows.

$$resi(r_N) = r_N$$

$$resi(G_N) = G_N - r_N \cdot coeff(G)$$

$$resi(B_N) = B_N - r_N \cdot coeff(B)$$

$$resi(R_N) = R_N - r_N \cdot coeff(R)$$

It should be noted that the number of dependent sub-components is not limited to one. There may be a plurality of dependent sub-components. For example, in the example illustrated in FIG. 28, B and R refer to G, and G refers to r. In this manner, a two-step prediction reference relationship may be used. In the example illustrated in FIG. 28, the prediction residuals are given as follows.

$$\text{resi}(r_N) = r_N$$

$$\text{resi}(B_N) = B_N - G_N \cdot \text{coeff}(B)$$

$$\text{resi}(R_N) = R_N - G_N \cdot \text{coeff}(R)$$

$$\text{resi}(G_N) = G_N - r_N \cdot \text{coeff}(G)$$

It should be noted that the reference relationships shown here are merely examples, and a reference relationship other than these may be used.

In addition, as illustrated in FIG. 26, in the three-dimensional data decoding device, when the prediction residuals of the integrated attribute information at point N after decoding are denoted as (resi($B_N$), resi($R_N$), resi($r_N$)), and the reference sub-component is denoted as $G_N$, the predicted values of ($B_N$, $R_N$, $r_N$) are calculated by multiplying $G_N$ by the prediction coefficients (coeff(B), coeff(R), coeff(r)). As a result, the integrated attribute information ($G_N$, $B_N$, $R_N$, $r_N$) generated by the three-dimensional data decoding device is given as follows.

$$G_N = \text{resi}(G_N)$$

$$B_N = \text{resi}(B_N) + G_N \cdot \text{coeff}(B)$$

$$R_N = \text{resi}(R_N) + G_N \cdot \text{coeff}(R)$$

$$r_N = \text{resi}(r_N) + G_N \cdot \text{coeff}(r)$$

In the example illustrated in FIG. 27, the integrated attribute information is given as follows.

$$r_N = \text{resi}(r_N)$$

$$G_N = \text{resi}(G_N) + r_N \cdot \text{coeff}(G)$$

$$B_N = \text{resi}(B_N) + r_N \cdot \text{coeff}(B)$$

$$R_N = \text{resi}(R_N) + r_N \cdot \text{coeff}(R)$$

In the example illustrated in FIG. 28, the integrated attribute information is given as follows.

$$r_N = \text{resi}(r_N)$$

$$B_N = \text{resi}(B_N) + G_N \cdot \text{coeff}(B)$$

$$R_N = \text{resi}(R_N) + G_N \cdot \text{coeff}(R)$$

$$G_N = \text{resi}(G_N) + r_N \cdot \text{coeff}(G)$$

As described above, for example, by performing the prediction by referring to a sub-component having a high correlation, a prediction residual of an encoding target can be decreased, and thus the code amount can be reduced. In addition, although the inter-sub-component prediction cannot be used for attribute information of 1 in the number of dimensions, such as reflectance, integrating attribute information to make the attribute information multidimensional enables the inter-sub-component prediction to be used to reduce the code amount.

Next, a third example of the prediction processing of integrated attribute information will be described. In the third example, the prediction in a prediction mode and the inter-sub-component prediction are used in combination as the scheme of encoding the integrated attribute information. In addition, here will be described an example of a case where the reference relationship illustrated in FIG. 26 is used as a reference relationship of the inter-sub-component prediction.

First, the first residual is calculated for each of G, B, R, and r by the prediction in a prediction mode. Furthermore, as illustrated in FIG. 26, a second residual that is a difference between a first residual of a processing target and a first residual of a reference target is calculated for each of B, R, and r by the inter-sub-component prediction referring to G. In this case, second residuals ($resi(G_N)$, $resi(B_N)$, $resi(R_N)$, $resi(r_N)$) generated by the three-dimensional data encoding device are given as follows.

$$resi(G_N) = G_N - pred(G_N)$$

$$resi(B_N) = \{B_N - pred(B_N)\} - resi(G_N) \cdot coeff(B)$$

$$resi(R_N) = \{R_N - pred(R_N)\} - resi(G_N) \cdot coeff(R)$$

$$resi(r_N) = \{r_N - pred(r_N)\} - resi(G_N) \cdot coeff(r)$$

In addition, integrated attribute information ($G_N$, $B_N$, $R_N$, $r_N$) generated by the three-dimensional data decoding device is given as follows.

$$G_N = resi(G_N) + pred(G_N)$$

$$B_N = \{resi(B_N) + pred(B_N)\} + resi(G_N) \cdot coeff(B)$$

$$R_N = \{resi(R_N) + pred(R_N)\} + resi(G_N) \cdot coeff(R)$$

$$r_N = \{resi(r_N) + pred(r_N)\} + resi(G_N) \cdot coeff(r)$$

The reference relationship in FIG. 26 is described here as an example, and it should be noted that the same processing is applicable to the reference relationship illustrated in FIG. 27 or FIG. 28. In addition, the same processing is applicable to a reference relationship other than these.

FIG. 29 is a flowchart of encoding processing of attribute information by the three-dimensional data encoding device. First, the three-dimensional data encoding device determines whether to integrate a plurality of items of attribute information (attribute components) to be processed (S301). For example, when the plurality of items of attribute information is a set of items of attribute information of predetermined types (e.g., color information and reflectance), the three-dimensional data encoding device may determine to integrate the plurality of items of attribute information. Alternatively, the three-dimensional data encoding device may determine whether to integrate the plurality of items of attribute information according to the numbers of dimensions of the plurality of items of attribute information or a total of the numbers of dimensions. For example, the three-dimensional data encoding device may determine to integrate the plurality of items of attribute information when attribute information with the number of dimensions smaller than a threshold value is included or when the total of the numbers of dimensions is smaller than a threshold value.

When determining to integrate the plurality of items of attribute information (Yes in S301), the three-dimensional data encoding device integrates the plurality of items of attribute information to generate the integrated attribute information (S302). In addition, the three-dimensional data encoding device stores (encodes) the integrated information in the metadata (S303) and encodes the integrated attribute information (S304).

On the other hand, when determining not to integrate the plurality of items of attribute information (No in S301), the three-dimensional data encoding device encodes each of the plurality of items of attribute information as an individual attribute component.

FIG. 30 is a flowchart of decoding processing of attribute information by the three-dimensional data decoding device. First, the three-dimensional data decoding device obtains (decodes) the integrated information from the metadata included in the bitstream (S311). Next, the three-dimensional data decoding device decodes encoded attribute information included in the bitstream to generate the attribute information (S312).

Next, the three-dimensional data decoding device determines, based on the integrated information, whether the decoded attribute information is integrated attribute information (S313). When the decoded attribute information is integrated attribute information (Yes in S313), the three-dimensional data decoding device separates the decoded attribute information to reconstruct an original plurality of items of attribute information (S314). On the other hand, when the decoded attribute information is not integrated attribute information (No in S313), the three-dimensional data decoding device outputs the decoded attribute information as it is.

It should be noted that the processing illustrated in FIG. 29 and FIG. 30 may be performed on a frame basis or on a slice basis.

The above describes mainly an example of integrating three-dimensional attribute information and one-dimensional attribute information. However, it should be noted that the numbers of dimensions of items of attribute information to be integrated together may be any number. That is, the three-dimensional data encoding device may integrate m-dimensional attribute information and n-dimensional attribute information to generate an m+n-dimensional attribute component. Here, m and n are each any natural number.

Alternatively, the three-dimensional data encoding device may integrate x-dimensional sub-components that are a part of m-dimensional first attribute information and n-dimensional second attribute information together to generate n+x-dimensional third attribute information. In this case, the three-dimensional data encoding device encodes fourth attribute information constituted by m-x-dimensional sub-components that are the rest of the first attribute information and the n+x-dimensional third attribute information.

Alternatively, for example, the three-dimensional data encoding device may separate and integrate three items of three-dimensional color information color 1 = (R1, G1, B1), color 2 = (R2, G2, B2), and color 3 = (R3, G3, B3) to generate component A = (R1, R2, R3), component B = (G1, G2, G3), and component C = (B1, B2, B3) and may encode the generated component A, component B, and component C. In this manner, by integrating sub-components having high correlation, accuracies of the inter-sub-component prediction and the inter-component prediction can be improved, and thus improvement in the encoding efficiency can be expected.

In addition, here is described an example in which the prediction is performed between components after the plurality of items of attribute information are integrated together. However, the same prediction (reference relationship) may be applied to a plurality of items of attribute information before the integration, by using the inter-component prediction described in Embodiment 1. For example, in the example illustrated in FIG. 26, the reference from r to G may be implemented by the inter-component prediction.

(Conclusion)

As described above, the decoding device (three-dimensional data decoding device) according to Embodiment 1 performs the process described in FIG. 31. The decoding device: receives a bitstream generated by encoding three-dimensional points each including first attribute information and second attribute information (S401); and predicts the first attribute information (for example, dependent attribute information) by referring to the second attribute information (for example, reference attribute information) (S402). For example, the decoding device decodes the first attribute information by using the prediction result (predicted value). For example, the decoding device calculates the first attribute information by referring to the second attribute information. The decoding device sums a first residual of the first attribute information included in encoded attribute information and a first predicted value to reconstruct the first attribute information.

Here, there are cases where there is a correlation between items of attribute information. Accordingly, by predicting the first attribute information by referring to the second attribute information, it may be possible to reduce the data amount of the first attribute information. Accordingly, the data amount handled in the decoding device can be reduced.

Furthermore, the decoding device: receives a bitstream; and decodes the bitstream. The bitstream includes: encoded attribute information of three-dimensional points each including first attribute information and second attribute information, and meta information (for example, dependency information or attr_param_type) indicating that the first attribute information is to be predicted by referring to the second attribute information. For example, the decoding device decodes the first attribute information using the meta information. For example, the decoding device predicts the first attribute information by referring to the second attribute information.

Here, there are cases where there is a correlation between items of attribute information. Accordingly, by predicting the first attribute information by referring to the second attribute information, it may be possible to reduce the data amount of the first attribute information. The decoding device can appropriately decode for which the data amount has been reduced in the above manner, by using the meta information. Furthermore, the data amount handled in the decoding device can be reduced.

For example, the first attribute information to be predicted and the second attribute information to be referred to are included in a one of the three-dimensional points. Accordingly, by predicting the first attribute information of a three-dimensional point by referring to the second attribute information of the three-dimensional point, it may be possible to reduce the data amount of the first attribute information. Accordingly, the data amount that is handled in the decoding device can be reduced.

For example, the first attribute information to be predicted and the second attribute information to be referred to are included in different ones of the three-dimensional points. In other words, the first attribute information to be predicted is included in a first three-dimensional point and the second attribute information to be referred to is included in a second three-dimensional point different from the first three-dimensional point.

For example, the first attribute information and the second attribute information is stored in a first component (for example, a dependent component) and a second component (for example, a reference component), respectively.

For example, a first quantization step for the first attribute information is greater than a second quantization step for the second attribute information. By using a small quantization step for the second attribute information that is to be referred to by other attribute information, deterioration of the second attribute information can be suppressed and accuracy of first attribute information prediction which refers to the second attribute information can be improved. Furthermore, by using a big quantization step for the first attribute information, the data amount can be reduced. Accordingly, encoding efficiency is improved while suppressing the deterioration of information as a whole.

For example, the first attribute information and the second attribute information are generated by decoding first encoded attribute information and second encoded attribute information, respectively, and the second attribute information has been losslessly compressed (reversibly compressed). For example, the first attribute information is irreversibly compressed.

In this manner, by using lossless compression on the second attribute information that is referred to by other attribute information, deterioration of the second attribute information can be suppressed and accuracy of first attribute information prediction which refers to the second attribute information can be improved. Accordingly, encoding efficiency is improved while suppressing the deterioration of information as a whole.

For example, as illustrated in FIG. 8, and so on, the first component and the second component each include a first dimension element and a second dimension element, the first dimension element of the first component is predicted by referring to the first dimension element of the second component, and the second dimension element of the first component is predicted by referring to the second dimension element of the second component. Accordingly, when there is a correlation between the same dimension elements in a plurality of components, the data amount can be reduced by using this correlation.

For example, as illustrated in FIG. 9, and so on, the first component includes a first dimension element and a second dimension element, the first dimension element is predicted by referring to the second component, and the second dimension element is predicted by referring to the first dimension element. Accordingly, depending on the attribute information, there are cases where there is a correlation between different components, and there are cases where there is a correlation between dimension elements included in a component. Therefore, by using the correlation between components and the correlation between dimension elements, the data amount can be reduced.

For example, the bitstream: does not include information (for example, pred_mode) on a first prediction mode applied to the first component; and includes information (for example, pred_mode) on a second prediction mode applied to the second component. Accordingly, since information on the first component can be reduced, the data amount can be reduced.

For example, as described in the fourth example of prediction processing, the bitstream includes a first residual value of the first attribute information, the first residual value is a difference between a third residual value of the first attribute information and a second residual value of the second attribute information, the third residual value is a difference between a first value of the first attribute information and a first predicted value of the first attribute information, and the second residual value is a difference between a second value of the second attribute information and a second predicted value of the second attribute information. Accordingly, since the difference between the residual of the first attribute information and the residual of the second attribute information is to be encoded, the data amount is reduced.

For example, as described in the first example and the second example of prediction processing, the bitstream includes a first residual value of the first attribute information, and the first residual value is a difference between a first value of the first attribute information and a second value of the second attribute information. Accordingly, since the difference between the value of the first attribute information and the value of the second attribute information is to be encoded, the data amount is reduced.

For example, as described in the first example and the third example of prediction processing, the bitstream includes a first residual value of the first attribute information, and the first residual value is a difference between a first value of the first attribute information and a second predicted value of the second attribute information. Accordingly, since the difference between the value of the first attribute information and the predicted value of the second attribute information is to be encoded, the data amount is reduced. Furthermore, since there is no need to calculate the predicted value of the first attribute information, the processing amount can be reduced.

For example, the bitstream includes a first residual value of the first attribute information, and the first residual value is a difference between a first predicted value of the first attribute information and a second residual value of the second attribute information. Accordingly, since the difference between the predicted value of the first attribute information and the residual value of the second attribute information is to be encoded, the data amount is reduced.

For example, the bitstream includes flag information (for example, inter_attribute_pred_enabled) indicating whether reference to the second attribute information in order to predict the first attribute information is enabled. Accordingly, since the decoding device can determine whether the second attribute information can be referred to in predicting the first attribute information by referring to the flag information, the decoding device can appropriately decode the bitstream.

For example, the first component includes a first-dimension element and a second dimension element, the bitstream includes first flag information indicating whether reference to the second attribute information in order to predict the first dimension element is enabled and second flag information indicating whether reference to the second attribute information in order to predict the second dimension element is enabled. Accordingly, since whether or not reference to the second attribute information is enabled can be switched on a dimension element basis, it may be possible to reduce the data amount.

For example, the bitstream includes coefficient information (for example, inter_attribute_pred_coeff) for calculating a first predicted value of the first attribute information. By using coefficient information, the data amount of a residual can be reduced.

For example, the bitstream includes a first data unit (for example, DADU) storing attribute information to be predicted by referring to other attribute information and second data unit (for example, ADU) storing attribute information not to be predicted by referring to other attribute information.

For example, as illustrated in FIG. 27, the first attribute information includes RGB values, the second attribute information includes a reflectance value, and at least one value among the RGB values is predicted by referring to the reflectance value. Accordingly, by using the correlation between colors that are typically correlated and reflectance, the data amount can be reduced.

For example, the decoding device includes a processor and memory, and the processor performs the above-described processes using the memory.

Furthermore, the encoding device (three-dimensional data encoding device) according to the present embodiment performs the process illustrated in FIG. 32. The encoding device encodes three-dimensional points, each of which includes first attribute information and second attribute information, to generate a bitstream. The encoding device predicts the first attribute information by referring to the second attribute information (S411), and encodes the first attribute information using a result of the predicting (S412). For example, the encoding device encodes the first attribute information to generate the bitstream. For example, the encoding device encodes the first attribute information using the result of the predicting (predicted value). For example, the encoding device encodes a first predicted value of the first attribute information of a three-dimensional point by referring to the second attribute information of the three-dimensional point. The encoding device calculates a first residual which is the difference between the first value and the first predicted value of the first attribute information, and encodes the first residual.

Here, there are cases where there is a correlation between items of attribute information. Therefore, by predicting the first attribute information by referring to the second attribute information, it may be possible to reduce the data amount of the first attribute information.

Furthermore, the encoding device obtains attribute information of three-dimensional points each including first attribute information and second attribute information, and encodes the first attribute information and the second attribute information of the three-dimensional points to generate a bitstream. The bitstream includes: encoded attribute information of the three-dimensional points; and meta information (for example, dependency information or attr_param_type) indicating that the first attribute information is to be predicted by referring to the second attribute information. For example, the encoding device stores the meta information in the bitstream. For example, the encoding device predicts the first attribute information by referring to the second attribute information.

Here, there are cases where there is a correlation between items of attribute information. Accordingly, by predicting the first attribute information by referring to the second attribute information, it may be possible to reduce the data amount of the first attribute information.

For example, the first attribute information to be predicted and the second attribute information to be referred to are included in a same one of the three-dimensional points. Accordingly, by predicting the first attribute information of a three-dimensional point by referring to the second attribute information of the three-dimensional point, it may be possible to reduce the data amount of the first attribute information. Accordingly, the data amount that is handled in the decoding device can be reduced.

For example, the first attribute information to be predicted and the second attribute information to be referred to are included in different ones of the three-dimensional points. In other words, the first attribute information to be predicted is included in a first three-dimensional point and the second attribute information to be referred to is included in a second three-dimensional point different from the first three-dimensional point.

For example, the first attribute information and the second attribute information is stored in a first component (for example, a dependent component) and a second component (for example, a reference component), respectively.

For example, a first quantization step for the first attribute information is greater than a second quantization step for the second attribute information. By using a small quantization step for the second attribute information that is to be referred to by other attribute information, deterioration of the second attribute information can be suppressed and accuracy of first attribute information prediction which refers to the second attribute information can be improved. Furthermore, by using a big quantization step for the first attribute information, the data amount can be reduced. Accordingly, encoding efficiency is improved while suppressing the deterioration of information as a whole.

For example, the first attribute information and the second attribute information are generated by decoding first encoded attribute information and second encoded attribute information, respectively, and the second attribute information has been losslessly compressed (reversibly compressed). For example, the first attribute information is irreversibly compressed.

In this manner, by using lossless compression on the second attribute information that is referred to by other attribute information, deterioration of the second attribute information can be suppressed and accuracy of first attribute information prediction which refers to the second attribute information can be improved. Accordingly, encoding efficiency is improved while suppressing the deterioration of information as a whole.

For example, as illustrated in FIG. 8, and so on, the first component and the second component each include a first dimension element and a second dimension element, the first dimension element of the first component is predicted by referring to the first dimension element of the second component, and the second dimension element of the first component is predicted by referring to the second dimension element of the second component. Accordingly, when there is a correlation between the same dimension elements in a plurality of components, the data amount can be reduced by using this correlation.

For example, as illustrated in FIG. 9, and so on, the first component includes a first dimension element and a second dimension element, the first dimension element is predicted by referring to the second component, and the second dimension element is predicted by referring to the first dimension element. Accordingly, depending on the attribute information, there are cases where there is a correlation between different components, and there are cases where there is a correlation between dimension elements included in a component. Therefore, by using the correlation between components and the correlation between dimension elements, the data amount can be reduced.

For example, the bitstream: does not include information (for example, pred_mode) on a first prediction mode applied to the first component; and includes information (for example, pred_mode) on a second prediction mode applied to the second component. For example, the encoding device does not store, in the bitstream, the information (for example, pred_mode) on the first prediction mode applied to the first component, and stores, in the bitstream, the information on the second prediction mode applied to the second component. Accordingly, since information on the first component can be reduced, the data amount can be reduced.

For example, as described in the fourth example of prediction processing, the bitstream includes a first residual value of the first attribute information, the first residual value is a difference between a third residual value of the first attribute information and a second residual value of the second attribute information, the third residual value is a difference between a first value of the first attribute information and a first predicted value of the first attribute information, and the second residual value is a difference between a second value of the second attribute information and a second predicted value of the second attribute information. Accordingly, since the difference between the residual of the first attribute information and the residual of the second attribute information is to be encoded, the data amount is reduced.

For example, as described in the first example and the second example of prediction processing, the bitstream includes a first residual value of the first attribute information, and the first residual value is a difference between a first value of the first attribute information and a second value of the second attribute information. Accordingly, since the difference between the value of the first attribute information and the value of the second attribute information is to be encoded, the data amount is reduced.

For example, as described in the first example and the third example of prediction processing, the bitstream includes a first residual value of the first attribute information, and the first residual value is a difference between a first value of the first attribute information and a second predicted value of the second attribute information. Accordingly, since the difference between the value of the first attribute information and the predicted value of the second attribute information is to be encoded, the data amount is reduced. Furthermore, since there is no need to calculate the predicted value of the first attribute information, the processing amount can be reduced.

For example, the bitstream includes a first residual value of the first attribute information, and the first residual value is a difference between a first predicted value of the first attribute information and a second residual value of the second attribute information. Accordingly, since the difference between the predicted value of the first attribute information and the residual value of the second attribute information is to be encoded, the data amount is reduced.

For example, the bitstream includes flag information (for example, inter_attribute_pred_enabled) indicating whether reference to the second attribute information in order to predict the first attribute information is enabled. For

28

example, the encoding device stores, in the bitstream, the flag information (for example, inter_attribute_pred_enabled) indicating whether reference to the second attribute information in order to predict the first attribute information is enabled. Accordingly, since the decoding device can determine whether the second attribute information can be referred to in predicting the first attribute information by referring to the flag information, the decoding device can appropriately decode the bitstream.

For example, the first component includes a first-dimension element and a second dimension element, the bitstream includes first flag information indicating whether reference to the second attribute information in order to predict the first dimension element is enabled and second flag information indicating whether reference to the second attribute information in order to predict the second dimension element is enabled. For example, the encoding device stores the first flag information and the second flag information in the bitstream. Accordingly, since whether or not reference to the second attribute information is enabled can be switched on a dimension element basis, it may be possible to reduce the data amount.

For example, the bitstream includes coefficient information (for example, inter_attribute_pred_coeff) for calculating a first predicted value of the first attribute information. For example, the encoding device stores the coefficient information in the bitstream. By using coefficient information, the data amount of a residual can be reduced.

For example, the bitstream includes a first data unit (for example, DADU) storing attribute information to be predicted by referring to other attribute information and second data unit (for example, ADU) storing attribute information not to be predicted by referring to other attribute information.

For example, as illustrated in FIG. 27, the first attribute information includes RGB values, the second attribute information includes a reflectance value, and at least one value among the RGB values is predicted by referring to the reflectance value. Accordingly, by using the correlation between colors that are typically correlated and reflectance, the data amount can be reduced.

For example, the encoding device includes a processor and memory, and the processor performs the above-described processes using the memory.

Furthermore, the decoding device (three-dimensional data decoding device) according to Embodiment 2 is a decoding device that decodes encoded attribute information of a three-dimensional point. The decoding device: decodes an encoded component of the encoded attribute information to generate a component; and divides the component into at least two sub-components.

Accordingly, the decoding device can reconstruct the original two sub-components from the component obtained by integrating the two subcomponents. Furthermore, since two sub-components are combined, the data amount of the control signal (metadata) is reduced. Accordingly, the data amount handled in the decoding device can be reduced.

Furthermore, the decoding device: receives a bitstream including meta information indicating that sub-components are included in a component of attribute information of a three-dimensional point; and divides the component into the sub-components according to the meta information.

Accordingly, the decoding device can reconstruct the original sub-components from the component obtained by integrating sub-components. Furthermore, since sub-components are combined, the data amount of the control signal (metadata) is reduced. Accordingly, the data amount handled in the decoding device can be reduced.

For example, a predicted value of a first dimension element of the component is calculated by referring to a second dimension element of the component. Through integration, the number of dimension elements included in the same component increases. Accordingly, since candidates for referencing when referencing inter-dimension element referencing is performed increases, it may be possible to improve encoding efficiency.

For example, the bitstream includes information on a prediction mode that is common to all dimension elements included in the component. Since the combining reduces the number of components, the number of items of the information can be reduced. Accordingly, the amount of data can be reduced.

For example, the component includes a reflectance value and RGB values, and the reflectance value is referenced in order to predict a G value among the RGB values. Accordingly, by using the correlation between colors that are typically correlated and the reflectance, the data amount can be reduced.

For example, the G value is referenced in order to predict an R value and a B value among the RGB values. Accordingly, by using the correlation of colors of a three-dimensional point that are typically correlated, the data amount can be reduced.

Furthermore, the encoding device (three-dimensional data encoding device according to Embodiment 2 is an encoding device that encodes attribute information of a three-dimensional point. The encoding device integrates components of items of attribute information into one component, and encodes the one component.

Accordingly, since two sub-components are combined, the data amount of the control signal (metadata) is reduced.

Furthermore, the encoding device encodes the attribute data of the three-dimensional point; and generates a bitstream including encoded attribute information meta information indicated that sub-components are included in the component of the attribute information of the three-dimensional point.

Accordingly, since sub-components are combined, the data amount of the control signal (metadata) is reduced.

For example, a predicted value of a first dimension element of the component is calculated by referring to a second dimension element of the component. Through integration, the number of dimension elements included in the same component increases. Accordingly, since candidates for referencing when referencing inter-dimension element referencing is performed increases, it may be possible to improve encoding efficiency.

For example, the bitstream includes information on a prediction mode that is common to all dimension elements included in the component. Since the combining reduces the number of components, the number of items of the information can be reduced. Accordingly, the amount of data can be reduced.

For example, the component includes a reflectance value and RGB values, and the reflectance value is referenced in order to predict a G value among the RGB values. Accordingly, by using the correlation between colors that are typically correlated and the reflectance, the data amount can be reduced.

For example, the G value is referenced in order to predict an R value and a B value among the RGB values. Accordingly, by using the correlation of colors of a three-dimensional point that are typically correlated, the data amount can be reduced.

A three-dimensional data encoding device (encoding device), a three-dimensional data decoding device (decoding device), and the like, according to embodiments of the present disclosure and variations of the embodiments have been described above, but the present disclosure is not limited to these embodiments, etc.

Note that each of the processors included in the three-dimensional data encoding device, the three-dimensional data decoding device, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the constituent elements may be implemented as dedicated hardware or may be realized by executing a software program suited to such constituent elements. Alternatively, the constituent elements may be implemented by a program executor such as a CPU or a processor reading out and executing the software program recorded in a recording medium such as a hard disk or a semiconductor memory.

The present disclosure may also be implemented as a three-dimensional data encoding method (encoding method), a three-dimensional data decoding method (decoding method), or the like executed by the three-dimensional data encoding device (encoding device), the three-dimensional data decoding device (decoding device), and the like.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

A three-dimensional data encoding device, a three-dimensional data decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining constituent elements in different embodiments, without materially departing from the spirit of the present disclosure.

[Industrial Applicability]

The present disclosure is applicable to a three-dimensional data encoding device and a three-dimensional data decoding device.

[Reference Signs List]

100, 300    three-dimensional data encoding device
101, 302    attribute information encoder
111         LoD generator

112  adjacent point searcher
113  predictor
114  residual calculator
115  quantizer
116  inverse quantizer
117  reconstructor
118  memory
119  arithmetic encoder
200, 400  three-dimensional data decoding device
201, 401  attribute information decoder
202  attribute information inverse converter
211  LoD generator
212  adjacent point searcher
213  predictor
214  arithmetic decoder
215  inverse quantizer
216  reconstructor
217  memory
301  integrator
402  separator

**Claims**

1. A decoding method comprising:

   receiving a bitstream generated by encoding three-dimensional points each including first attribute information and second attribute information; and
   predicting the first attribute information by referring to the second attribute information.

2. A decoding method comprising:

   receiving a bitstream; and
   decoding the bitstream, wherein
   the bitstream includes:

   encoded attribute information of three-dimensional points each including first attribute information and second attribute information, and
   meta information indicating that the first attribute information is to be predicted by referring to the second attribute information.

3. The decoding method according to claim 1 or 2, wherein
   the first attribute information to be predicted and the second attribute information to be referred to are included in a same one of three-dimensional points.

4. The decoding method according to claim 1 or 2, wherein
   the first attribute information to be predicted and the second attribute information to be referred to are included in different ones of the three-dimensional points.

5. The decoding method according to claim 1 or 2, wherein
   the first attribute information and the second attribute information are stored in a first component and a second component, respectively.

6. The decoding method according to claim 1 or 2, wherein
   a first quantization step for the first attribute information is greater than a second quantization step for the second attribute information.

7. The decoding method according to claim 1 or 2, wherein

the first attribute information and the second attribute information are generated by decoding first encoded attribute information and second encoded attribute information, respectively, and
the second attribute information has been losslessly compressed.

8. The decoding method according to claim 5, wherein

the first component and the second component each include a first dimension element and a second dimension element,
the first dimension element of the first component is predicted by referring to the first dimension element of the second component, and
the second dimension element of the first component is predicted by referring to the second dimension element of the second component.

9. The decoding method according to claim 5, wherein

the first component includes a first dimension element and a second dimension element,
the first dimension element is predicted by referring to the second component, and
the second dimension element is predicted by referring to the first dimension element.

10. The decoding method according to claim 5, wherein
the bitstream:

does not include information on a first prediction mode applied to the first component; and
includes information on a second prediction mode applied to the second component.

11. The decoding method according to claim 1 or 2, wherein

the bitstream includes a first residual value of the first attribute information,
the first residual value is a difference between a third residual value of the first attribute information and a second residual value of the second attribute information,
the third residual value is a difference between a first value of the first attribute information and a first predicted value of the first attribute information, and
the second residual value is a difference between a second value of the second attribute information and a second predicted value of the second attribute information.

12. The decoding method according to claim 1 or 2, wherein

the bitstream includes a first residual value of the first attribute information, and
the first residual value is a difference between a first value of the first attribute information and a second value of the second attribute information.

13. The decoding method according to claim 1 or 2, wherein

the bitstream includes a first residual value of the first attribute information, and
the first residual value is a difference between a first value of the first attribute information and a second predicted value of the second attribute information.

14. The decoding method according to claim 1 or 2, wherein
the bitstream includes flag information indicating whether reference to the second attribute information in order to predict the first attribute information is enabled.

15. The decoding method according to claim 1 or 2, wherein
the bitstream includes coefficient information for calculating a first predicted value of the first attribute information.

16. The decoding method according to claim 1 or 2, wherein
the bitstream includes a first data unit and a second data unit, the first data unit storing attribute information to be predicted by referring to other attribute information, the second data unit storing attribute information not to be predicted by referring to other attribute information.

17. The decoding method according to claim 1 or 2, wherein

the first attribute information includes RGB values,
the second attribute information includes a reflectance value, and
at least one value among the RGB values is predicted by referring to the reflectance value.

18. An encoding method for encoding three-dimensional points to generate a bitstream, the three-dimensional points each including first attribute information and second attribute information, the encoding method comprising:

predicting the first attribute information by referring to the second attribute information; and
encoding the first attribute information using a result of the predicting.

19. A decoding device comprising:

a processor; and
memory, wherein
using the memory, the processor:

receives a bitstream generated by encoding three-dimensional points each including first attribute information and second attribute information; and
predicts the first attribute information by referring to the second attribute information.

20. An encoding device that encodes three-dimensional points to generate a bitstream, the three-dimensional points each including first attribute information and second attribute information, the encoding device comprising:

a processor; and
memory, wherein
using the memory, the processor:

predicts the first attribute information by referring to the second attribute information; and
encodes the first attribute information using a result of the predicting.

# FIG. 1

| | Geometry information | First color information | Second color information |
|---|---|---|---|
| n = 1 | $G(1) = (x_1, y_1, z_1)$ | $A(1) = (R_{A1}, G_{A1}, B_{A1})$ | $B(1) = (R_{B1}, G_{B1}, B_{B1})$ |
| n = 2 | $G(2) = (x_2, y_2, z_2)$ | $A(2) = (R_{A2}, G_{A2}, B_{A2})$ | $B(2) = (R_{B2}, G_{B2}, B_{B2})$ |
| $\vdots$ | $\vdots$ | $\vdots$ | $\vdots$ |
| n = N | $G(N) = (x_N, y_N, z_N)$ | $A(N) = (R_{AN}, G_{AN}, B_{AN})$ | $B(N) = (R_{BN}, G_{BN}, B_{BN})$ |

# FIG. 2

First attribute information ⟶

Second attribute information ⟶

Attribute information encoder

101

100

Encoded attribute information

Dependency information

# FIG. 3

Start

↓

Encode first attribute information — S101

↓

Encode second attribute information by referring to encoded information of first attribute information — S102

↓

Store, in bitstream, dependency information indicating that second attribute information is dependent on first attribute information — S103

↓

End

# FIG. 4

200

Encoded attribute information

Dependency information

Attribute information decoder

First attribute information

Second attribute information

201

# FIG. 5

Start

S111

Obtain, from bitstream, dependency information indicating that second attribute information is dependent on first attribute information

S112

Decode first attribute information

S113

Decode second attribute information by referring to decoded information of first attribute information

End

# FIG. 6

Attribute
information

Geometry
information

101

Attribute information
encoder

LoD generator 111

Adjacent point
searcher 112

Predictor 113

Memory 118

Residual calculator 114

Reconstructor 117

Quantizer 115

Inverse quantizer 116

Arithmetic encoder 119

Encoded
attribute
information

Metadata

# FIG. 7

Encoded attribute information

Geometry information

201

Attribute information decoder

211
LoD generator

212
Adjacent point searcher

213
Predictor

217
Memory

216
Reconstructor

214
Arithmetic decoder

215
Inverse quantizer

Attribute information

FIG. 8

Component A
(reference component)

Component B
(dependent component)

FIG. 9

Component A
(reference component)

Component B
(dependent component)

# FIG. 10

First adjacent point

Second adjacent point

Third adjacent point

Current point

# FIG. 11

TLV unit

| Type | Length | Value |
|------|--------|-------|

# FIG. 12

| SPS | GPS | APS | ▨ | GDU | ▨ | ADU | ▨ | DADU |
|-----|-----|-----|---|-----|---|-----|---|------|

GDU header    ADU header

DADU header

# FIG. 13

```
TLV_unit(){
  type
  length
  if(type == SPS){
      SPS_syntax
  }else if(type == geometry data unit (GDU)){
      geometry_data_unit_header()
      geometry_data_unit_data()
  }else if(type == attribute data unit (ADU))
      attribute_data_unit_header()
      attribute_data_unit_data()
  }else if(type == dependent attribute data unit (DADU))
      dependent_attribute_data_unit_header()
      dependent_attribute_data_unit_data()
  }
```

# FIG. 14

```
attribute_parameter(i){
    attr_param_type
    if( attr_param_type == 1){
        //Processing for attr_param_type == 1
    }
    else if( attr_param_type == 4){
      reference_attr_id[i];
    }
}
```

# FIG. 15

```
dependent_attribute_data_unit_header(){
    reference_attr_slice_id;
    attr_id;
    reference_attr_id;
                :
    inter_attribute_pred_enabled;
    predmode_reference_flag;
    if(inter_attribute_pred_enabled) {
        for(i = 0; i < lod_max_levels; i++) {
            for(c =0; c < num_dimension; c++) {
                inter_attribute_pred_coeff[i][c];
            }
        }
    }
                :
}
```

## FIG. 16

```
dependent_attribute_data_unit(){
    for(i = 0; i < point_count; i++) {
        for(c = 0; c < num_dimension; c++) {
                    :
            resi;
                    :
        }
    }
}
```

## FIG. 17

```
dependent_attribute_data_unit(){
    for(i = 0; i < point_count; i++) {
        if(!predmode_reference_flag) {
                pred_mode;
        }
        for(c = 0; c < num_dimension; c++) {
                    :
            resi(or resi2);
                    :
        }
    }
}
```

# FIG. 18

```
           ( Start )
               │
               ▼                    S121
          ╱ Target ╲
         ╱ component being ╲   No
        ╱ dependent         ╲──────────────────┐
         ╲ component?       ╱                   │
          ╲               ╱                     │
               │ Yes          S122              │
               ▼                                │
   ┌──────────────────────────┐                 │
   │ Store reference component│                 │
   │ ID and dependence        │                 │
   │ relationship in metadata │                 │
   └──────────────────────────┘                 │
               │           S123                 │              S124
               ▼                                ▼
   ┌──────────────────────────┐    ┌──────────────────────────┐
   │ Encode target component  │    │ Encode target component  │
   │ by referring to reference│    │ in isolation             │
   │ component                │    │                          │
   └──────────────────────────┘    └──────────────────────────┘
               │                                │
               ◄────────────────────────────────┘
               ▼
           ( End )
```

# FIG. 19

```
           ( Start )
               │            S131
               ▼
   ┌──────────────────────────┐
   │ Obtain reference component│
   │ ID and dependence         │
   │ relationship from metadata│
   └──────────────────────────┘
               │
               ▼                    S132
          ╱ Target ╲
         ╱ component being ╲   No
        ╱ dependent         ╲──────────────────┐
         ╲ component?       ╱                   │
          ╲               ╱                     │
               │ Yes          S133              │              S134
               ▼                                ▼
   ┌──────────────────────────┐    ┌──────────────────────────┐
   │ Decode target component  │    │ Decode target component  │
   │ by referring to reference│    │ in isolation             │
   │ component                │    │                          │
   └──────────────────────────┘    └──────────────────────────┘
               │                                │
               ◄────────────────────────────────┘
               ▼
           ( End )
```

# FIG. 20

```
frame_attr_param_SEI(){
  sps_idx
  frame_idx
  attribute_idx
  num_parameter
   for(i = 0; i < num_parameter; i++){
     attribute_parameter(i)
   }
}
```

# FIG. 21

```
angle_partial_access_SEI(){
   sps_idx
   num_angle
   for(i = 0; i < num_angle; i++){
     angle;
     attr_id;
     dependent_flag
     if(dependent_flag)
       reference_attr_id
   }
}
```

# FIG. 22

```
( Start )
   │
   ▼                                          S211
┌─────────────────────────────────────────────┐
│     Decode and analyze sei for partial decoding │
└─────────────────────────────────────────────┘
   │
   ▼                                          S212
┌─────────────────────────────────────────────┐
│ Analyze viewpoint information and obtain attribute │
│ component ID of attribute information for viewpoint │
│ to be decoded                                 │
└─────────────────────────────────────────────┘
   │
   ▼                                          S213
┌─────────────────────────────────────────────┐
│ When attribute component is dependent component, │
│ obtain attribute component ID of reference component │
└─────────────────────────────────────────────┘
   │
   ▼                                          S214
┌─────────────────────────────────────────────┐
│ Search attribute data units, and extract and decode │
│ data unit having obtained attribute component ID │
└─────────────────────────────────────────────┘
   │
   ▼
( End )
```

# FIG. 23

```
                    Integrated              300
                    attribute
                    information            Encoded
First attribute                            attribute
information ────────►┌───────────┐         information
                     │           │  ┌──────────┐
                     │ Integrator│──►│Attribute │────►
Second attribute ───►│           │  │information│   Encoded
information          └───────────┘  │encoder   │   integration
                          301       └──────────┘   information
                                        302
```

FIG. 24

| | Geometry information | Color information | Reflectance information | | Integrated attribute information |
|---|---|---|---|---|---|
| $n = 1$ | $G(1) = (x_1, y_1, z_1)$ | $A(1) = (R_{A1}, G_{A1}, B_{A1})$ | $B(1) = (r_{B1})$ | | $C(1) = (R_{A1}, G_{A1}, B_{A1}, r_{B1})$ |
| $n = 2$ | $G(2) = (x_2, y_2, z_2)$ | $A(2) = (R_{A2}, G_{A2}, B_{A2})$ | $B(2) = (r_{B2})$ | $\Rightarrow$ | $C(2) = (R_{A2}, G_{A2}, B_{A2}, r_{B2})$ |
| ⋮ | ⋮ | ⋮ | ⋮ | | ⋮ |
| $n = N$ | $G(N) = (x_N, y_N, z_N)$ | $A(N) = (R_{AN}, G_{AN}, B_{AN})$ | $B(N) = (r_{BN})$ | | $C(N) = (R_{AN}, G_{AN}, B_{AN}, r_{BN})$ |

# FIG. 25

Encoded
attribute
information

Encoded
integration
information

Integrated
attribute
information

400

Attribute
information
decoder

401

Separator

402

First
attribute
information

Second
attribute
information

FIG. 26

FIG. 27

FIG. 28

# FIG. 29

```
        ┌─────────┐
        │  Start  │
        └────┬────┘
             │
             ▼                    S301
          ╱─────────╲
         ╱ Attribute  ╲              No
        ╱  information  ╲─────────────────┐
        ╲ items to be    ╱                │
         ╲ integrated?  ╱                 │
          ╲────┬───────╱                  │
             Yes                          │
             │                            │
             ▼                    S302    │
   ┌──────────────────────────────┐       │
   │ Integrate attribute          │       │
   │ information items             │       │
   └──────────────┬───────────────┘       │
                  │                        │
                  ▼             S303       │
   ┌──────────────────────────────┐       │
   │ Store integrated information  │       │
   │ in metadata                   │       │
   └──────────────┬───────────────┘       │
                  │                        │
                  ▼             S304       │
   ┌──────────────────────────────┐       │
   │ Encode integrated attribute   │       │
   │ information                   │       │
   └──────────────┬───────────────┘       │
                  │                        │
                  ◄────────────────────────┘
                  │
                  ▼
            ┌─────────┐
            │   End   │
            └─────────┘
```

# FIG. 30

```
            ( Start )
                │
                ▼                         ⌒S311
┌──────────────────────────────────────────────┐
│  Obtain integrated information from metadata   │
└──────────────────────────────────────────────┘
                │
                ▼                         ⌒S312
┌──────────────────────────────────────────────┐
│      Decode encoded attribute information      │
└──────────────────────────────────────────────┘
                │
                ▼                         ⌒S313
              ╱       Attribute information       ╲
            ╱        being integrated attribute      ╲     No
           ◄            information?                    ►────┐
            ╲                                        ╱        │
              ╲              Yes                   ╱          │
                │                                             │
                ▼                         ⌒S314               │
┌──────────────────────────────────────────────┐             │
│         Separate attribute information          │           │
└──────────────────────────────────────────────┘             │
                │                                             │
                ▼◄───────────────────────────────────────────┘
             ( End )
```

# FIG. 31

```
           ( Start )
               │
               ▼                        ⟋S401
┌─────────────────────────────────────┐
│ Receive bitstream generated by       │
│ encoding three-dimensional points    │
│ each including first attribute       │
│ information and second attribute     │
│ information                          │
└─────────────────────────────────────┘
               │
               ▼                        ⟋S402
┌─────────────────────────────────────┐
│ Predict first attribute information  │
│ by referring to second attribute     │
│ information                          │
└─────────────────────────────────────┘
               │
               ▼
           ( End )
```

# FIG. 32

```
           ( Start )
               │
               ▼                        ⟋S411
┌─────────────────────────────────────┐
│ Predict first attribute information  │
│ by referring to second attribute     │
│ information                          │
└─────────────────────────────────────┘
               │
               ▼                        ⟋S412
┌─────────────────────────────────────┐
│ Encode first attribute information   │
│ using result of predicting           │
└─────────────────────────────────────┘
               │
               ▼
           ( End )
```

## INTERNATIONAL SEARCH REPORT

| International application No. |
| --- |
| **PCT/JP2023/021711** |

### A. CLASSIFICATION OF SUBJECT MATTER

*G06T 9/00*(2006.01)i
FI:   G06T9/00

According to International Patent Classification (IPC) or to both national classification and IPC

### B. FIELDS SEARCHED

Minimum documentation searched (classification system followed by classification symbols)

G06T9/00-9/40, H04N19/00-19/98

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore & KEYWORDS: point cloud, inter-channel, cross-component, etc.

### C. DOCUMENTS CONSIDERED TO BE RELEVANT

| Category* | Citation of document, with indication, where appropriate, of the relevant passages | Relevant to claim No. |
| --- | --- | --- |
| X | G-PCC codec description v12, ISO/IEC JTC 1/SC 29/WG 7 MPEG 3D Graphics Coding, [N0151] [online], ISO, 27 September 2021 [retrieved on 01 August 2023], pp. 83-88, 113-118, Retrieved from the Internet: <URL:https://mpeg-pcc.org/wp-content/uploads/2021/09/N00151_G-PCC_codec_description_v12_d0.docx> in particular, clauses 3.8.13.1, 3.12.2, 3.12.3 | 1-3, 5-7, 9, 11-16, 18-20 |
| Y | in particular, clauses 3.8.13.1, 3.12.2, 3.12.3 | 10 |
| A | entire text, all drawings | 4, 8, 17 |
| Y | CHEN, Jianle et al., Algorithm Description of Joint Exploration Test Model 7 (JEM 7), Joint Video Exploration Team (JVET) of ITU-T SG 16 WP 3 and ISO/IEC JTC 1/SC 29/WG 11 7th Meeting: Torino, IT, 13-21 July 2017, [JVET-G1001-v1] [online], JVET-G1001 (version 1), ITU-T, 19 August 2017 [retrieved on 01 August 2023], Retrieved from the Internet: <URL: https://jvet-experts.org/doc_end_user/documents/7_Torino/wg11/JVET-G1001-v1.zip>: JVET-G1001-v1.docx: pp. 8, 9 in particular, clauses 2.2.1.2. | 10 |
| A | WO 2022/070469 A1 (KDDI CORP.) 07 April 2022 (2022-04-07) entire text, all drawings | 1-20 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 August 2023** | **08 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/021711**

**C.    DOCUMENTS CONSIDERED TO BE RELEVANT**

| Category* | Citation of document, with indication, where appropriate, of the relevant passages | Relevant to claim No. |
|---|---|---|
| A | US 2022/0051447 A1 (TENCENT AMERICA LLC) 17 February 2022 (2022-02-17) entire text, all drawings | 1-20 |
| A | US 2021/0329270 A1 (TENCENT AMERICA LLC) 21 October 2021 (2021-10-21) entire text, all drawings | 1-20 |
| A | US 2021/0112276 A1 (TENCENT AMERICA LLC) 15 April 2021 (2021-04-15) entire text, all drawings | 1-20 |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| WO | 2022/070469 | A1 | 07 April 2022 | (Family: none) | | | |
| US | 2022/0051447 | A1 | 17 February 2022 | CN | 114365502 | A | |
| | | | | KR | 10-2022-0021919 | A | |
| US | 2021/0329270 | A1 | 21 October 2021 | CN | 114424247 | A | |
| | | | | KR | 10-2022-0035224 | A | |
| US | 2021/0112276 | A1 | 15 April 2021 | CN | 113795870 | A | |
| | | | | KR | 10-2021-0136082 | A | |

**INTERNATIONAL SEARCH REPORT**
Information on patent family members

International application No.

**PCT/JP2023/021711**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014020663 A